# EUROPEAN PATENT SPECIFICATION

(11) **EP 3 850 308 B1**
(45) Date of publication and mention of the grant of the patent: **27.12.2023**
(21) Application number: 18933015.2
(22) Date of filing: 14.09.2018
(51) Int. Cl.: G05D 1/02

(54) **NAVIGATION SYSTEM FOR USE IN AUTOMOMOUS TOOL AND METHOD FOR CONTROLLING AUTONOMOUS TOOL**
NAVIGATIONSSYSTEM ZUR VERWENDUNG IN EINEM AUTONOMEN WERKZEUG UND VERFAHREN ZUR STEUERUNG EINES AUTONOMEN WERKZEUGS
SYSTÈME DE NAVIGATION DESTINÉ À ÊTRE UTILISÉ DANS UN OUTIL AUTONOME ET PROCÉDÉ DE COMMANDE D'OUTIL AUTONOME

(43) Date of publication of application: 21.07.2021
(73) Proprietor: Techtronic Cordless GP, Anderson, SC 29621 (US)
(72) Inventor: LEE, Hei Man, Hong Kong (CN); CHEUNG, Ngai, Hong Kong (CN); KIM, Dohoon, Hong Kong (CN); FAUTEUX, Denis Gaston, Hong Kong (CN); LIAN, Hai, Dongguan, Guangdong 523960 (CN)
(74) Representative: Novagraaf Group
(86) International application number: PCT/CN2018/105739
(87) International publication number: WO 2020/051882

(56) References cited:
- WO-A1-2017/123137
- CN-A- 102 346 481
- CN-A- 107 942 348
- US-A1- 2010 209 043
- US-A1- 2012 089 323
- US-A1- 2015 271 991
- US-A1- 2016 165 795
- KLEIN MATTHEW A ET AL: "Autonomous, Precision Snow Removal in an Urban Environment, Featuring Ultra-Wideband Beacons", GNSS 2016 - PROCEEDINGS OF THE 29TH INTERNATIONAL TECHNICAL MEETING OF THE SATELLITE DIVISION OF THE INSTITUTE OF NAVIGATION (ION GNSS+ 2016), THE INSTITUTE OF NAVIGATION, 8551 RIXLEW LANE SUITE 360 MANASSAS, VA 20109, USA, 16 September 2016 (2016-09-16), pages 1178-1183, XP056013766,

## Description

### TECHNICAL FIELD

The present invention relates to a navigation system and a method for controlling a device, and particularly, although not exclusively, to a navigation system for use in an autonomous tool and a method for controlling an autonomous tool.

### BACKGROUND

The maintenance of lawns requires a significant amount of manual labour including constant watering, fertilizing and mowing of the lawn to maintain a strong grass coverage. Although watering and fertilizing can sometimes be handled with minimal effort by use of a sprinkler or irrigation system, the mowing process is one process that demands a significant amount of physical effort from gardeners.

Designers and manufacturers of lawn mowers have attempted to manufacture autonomous lawn mowers for some time to replace the traditional push pull mowers. However, the unpredictability of a landscape together with the cost of creating an accurate and usable product has meant many autonomous lawn mowers simply do not perform at an adequate level of performance.

The US 2016/165795 A1 discloses a method of mapping an area to be mowed with an autonomous mowing robot, wherein mapping data are received from the mowing robot, specifying an area to be mowed as well as a plurality of locations of beacons and geographic coordinates for reference points within the area. The US 2015/271991 A1 refers to a robot lawn mower including a drive system, a localization system, a teach monitor and a controller, wherein a data-processing device of the controller executes a teach routine for tracing a perimeter around the lawn and storing global positions determined by the localizing system. The US 2012/089323 A1 describes an optical system mounted to a moving object for navigation in an array of beacons having at least one optical emitter emitting an optical signal. The WO 2017/123137 A1 relates to a method for navigating a robotic tool within an area, the robotic tool receives signals from a beacon and determines a distance to the beacon, wherein accelerometers or odometers are further used to determine the position of the robotic tool within the operation area. The document XP56013766 relates to an autonomous urban snow removal with a localization and navigation system using Ultra-Wideband beacons and GPS data as well as wheel odometer and inertial navigation systems, wherein active beacons provide an external absolute frame for the operation area.

The present shortcomings are in part due to the fact that gardens come in many different varieties and shapes, with different elevations and profiles. Thus the autonomous mowers have had significant trouble in navigating these different types of terrain. In turn, many push mowers are still preferred by users as their performance and control can still be manually controlled to overcome problems associated with different landscape profiles.

### SUMMARY OF THE INVENTION

In accordance with a first aspect of the present invention, there is provided a navigation system as defined by claim 9 arranged for use with the method for controlling an autonomous tool according to claims 1 to 8 comprising: a plurality of anchors disposed separately on a terrain each arranged to emit an electromagnetic signal; a signaling module including a signal receiver arranged to receive the electromagnetic signal, wherein the signaling module is connected to the autonomous tool arranged to move on the terrain; and a processor arranged to process the electromagnetic signal received by the signal receiver so as to determine a physical distance between the signaling module and each of the plurality of anchors; wherein the processor is further arranged to determine a current position of the signaling module with respect to a reference position on the terrain based on the determined physical distances and map data of the terrain associated with a position of each of the plurality of anchors.

In an embodiment of the first aspect, the processor is further arranged to determine the current position of the signaling module based on the determined physical distances and the map data of the terrain associated with the position of at least three of the plurality of anchors.

In an embodiment of the first aspect, the processor is further arranged to verify the current position of the signaling module based on the determined physical distances and the map data of the terrain associated with the position of an additional anchor other than the at least three of the plurality of anchors.

In an embodiment of the first aspect, the processor is arranged to determine the physical distance between the signaling module and each of the plurality of anchors based on a signal propagation period of the electromagnetic signal emitted from each of the plurality of anchors reaching the signaling module.

In an embodiment of the first aspect, the processor is further arranged to determine the physical distance between the signaling module and each of the plurality of anchors based on a signal propagation speed of the electromagnetic signal on the terrain.

In an embodiment of the first aspect, the physical distance is determined based on a time-of-flight calculation method.

In an embodiment of the first aspect, the reference position includes a docking position of the autonomous tool.

In an embodiment of the first aspect, the reference position includes the position of one of the plurality of the anchors.

In an embodiment of the first aspect, the electromagnetic signal includes a radio frequency signal.

In an embodiment of the first aspect, the electromagnetic signal includes an ultrawide band radio frequency signal.

In an embodiment of the first aspect, the electromagnetic signal includes an infrared signal.

In an embodiment of the first aspect, the electromagnetic signal includes a laser signal.

In an embodiment of the first aspect, the navigation system further comprises at least one sensor arranged to provide supplementary information associated with a navigation of the autonomous tool to the processor.

In an embodiment of the first aspect, the at least one sensor includes at least one of an IMU, an odometry sensor and a GPS sensor.

In an embodiment of the first aspect, the plurality of anchors are positioned at a plurality of corners of a polygonal area on the terrain.

In an embodiment of the first aspect, the autonomous tool is arranged to operate within the polygonal area bound by the plurality of anchors.

In an embodiment of the first aspect, at least one of the plurality of anchors is positioned away from a predetermined boundary of a target area of operation on the terrain.

In an embodiment of the first aspect, the autonomous tool includes an outdoor tool or an indoor tool.

In an embodiment of the first aspect, the outdoor tool includes an autonomous lawn mower, a snow thrower or a pressure washer.

In an embodiment of the first aspect, the indoor tool includes a vacuum cleaner.

In accordance with a second aspect of the present invention, there is provided a method for controlling an autonomous tool as defined by claim 1, comprising the steps of: receiving, at a current position of the autonomous tool, an electromagnetic signal emitted from each of a plurality of signal sources disposed separately on a terrain; processing the received electromagnetic signals thereby determining a physical distance between the autonomous tool and each of the plurality of signal sources; and determining the current position of the autonomous tool with respect to a reference position on the terrain based on the determined physical distances and map data of the terrain associated with a position of each of the plurality of signal sources.

The current position of the autonomous tool with respect to a reference position on the terrain is determined based on the determined physical distances and the map data of the terrain associated with the position of at least three of the plurality of signal sources.

In an embodiment of the second aspect, the physical distance between the signaling module and each of the plurality of signal sources is determined further based on a signal propagation speed of the electromagnetic signal on the terrain.

In an embodiment of the second aspect, the method further comprises the steps of transmitting, from the autonomous tool; a triggering signal to each of the plurality of signal sources; wherein the plurality of signal sources is arranged to transmit the electromagnetic signal upon receiving the triggering signal.

In an embodiment of the second aspect, the method further comprises the step of determining the physical distance between the autonomous tool and each of the plurality of signal sources based on a signal propagation period of the triggering signal emitted from the autonomous tool reaching each of the plurality of signal sources and the electromagnetic signal emitted from each of the plurality of signal sources reaching the autonomous tool respectively.

In an embodiment of the second aspect, the physical distance is determined based on a time-of-flight calculation method.

In an embodiment of the second aspect, the reference position includes a docking position of the autonomous tool.

In an embodiment of the second aspect, the reference position includes the position of an anchor, wherein the anchor is the signal source arranged to emit the electromagnetic signal.

In an embodiment of the second aspect, the method further comprises the step of processing supplementary information associated with a navigation of the autonomous tool, wherein the supplementary information is provided by at least one sensor.

In an embodiment of the second aspect, the at least one sensor includes at least one of an IMU, an odometry sensor and a GPS sensor.

In an embodiment of the second aspect, the method further comprises the step of determining a travelling path starting from the current position of the autonomous tool, wherein the travelling path substantially flood fills a target area of operation bound by a predetermined boundary.

In an embodiment of the second aspect, the travelling path is determined based on an A* pathfinding process.

In an embodiment of the second aspect, the plurality of anchors are positioned at a plurality of corners of a polygonal area defining the target area of operation on the terrain.

In an embodiment of the second aspect, the method further comprises the step of defining at least one keep out area to be excluded from the target area.

In an embodiment of the second aspect, the method further comprises the step of creating and storing map data of the terrain associated with positions of the anchors, the target area of operation and the at least one keep out area.

In an embodiment of the second aspect, the map data is created upon running a boundary-walking routine on the autonomous tool.

In an embodiment of the second aspect, at least one of the plurality of anchors is positioned away from the predetermined boundary.

In an embodiment of the second aspect, the map data is created by an application executed on a computing device.

In an embodiment of the second aspect, the method further comprises the step of partitioning a global area of operation into a plurality of local areas of operation based on a plurality of boundaries defined by the plurality of anchors disposed separately on the terrain.

In an embodiment of the second aspect, the autonomous tool is controlled to operate on one of plurality of local areas of operation in each operation routine.

In an embodiment of the second aspect, the method further comprises the step of initializing an operation of the autonomous tool prior to the step of determining a travelling path starting from the current position of the autonomous tool.

In an embodiment of the second aspect, the step of initializing an operation of the autonomous tool comprises the step of obtaining an orientation of the autonomous tool by: determining an initial position of the autonomous tool with respect to the reference position on the terrain; rotating the autonomous tool from a first direction to a second direction; and travelling the autonomous tool with a predetermined distance along the second direction; and determining the orientation of the autonomous tool positioned at the second direction based on the determination of the initial position and the current position with respect to the reference position.

The method further comprises the step of determining the current position of the autonomous tool based on a failure of reception of electromagnetic signal emitted from at least one of the plurality of signal sources during an operation of the autonomous tool.

In an embodiment of the second aspect, the method further comprises the step of recording the failure of reception of the electromagnetic signals associated with a predetermined position in the map data of the terrain.

In an embodiment of the second aspect, the method further comprises the step of continuing the operation of the autonomous tool in response to the failure of reception of the electromagnetic signal.

In an embodiment of the second aspect, the method further comprises the step of resuming the determination of the current position of the autonomous tool based on trilateration and/or triangulation upon successfully receiving the electromagnetic signal emitted from at least three of the plurality of signal sources.

In an embodiment of the second aspect, the autonomous tool includes an outdoor tool or an indoor tool.

In an embodiment of the second aspect, the outdoor tool includes an autonomous lawn mower, a snow thrower or a pressure washer.

In an embodiment of the second aspect, the indoor tool includes a vacuum cleaner.

### BRIEF DESCRIPTION OF THE DRAWINGS

Embodiments of the present invention will now be described, by way of example, with reference to the accompanying drawings in which:
Figure 1 is an illustration of an autonomous lawn mower in accordance with one embodiment of the present invention;
Figure 2 is a block diagram illustrating an example of various control systems and modules of the autonomous lawn mower of Figure 1;
Figure 3 is a flow chart illustrating the operation of the autonomous lawn mower of Figure 1;
Figure 4 is a schematic diagram showing the triangulation of an object at an unknown position;
Figure 5 is a schematic diagram showing the triangulation of the mower within a boundary area;
Figure 6 is a schematic diagram showing the boundary- walking of the autonomous lawn mower about the boundary area;
Figure 7a is a schematic diagram showing the initial movement of the autonomous lawn mower from its origin;
Figure 7b is a schematic diagram showing the initialization of the autonomous lawn mower;
Figure 7c is a schematic diagram showing the initialization of the autonomous lawn mower;
Figure 7d is a schematic diagram showing the initialization of the autonomous lawn mower;
Figure 7e is a schematic diagram showing the initialization of the autonomous lawn mower;
Figure 8a is a schematic diagram showing the mowing path of the autonomous lawn mower;
Figure 8b is a schematic diagram showing the mowing path of the autonomous lawn mower;
Figure 9 is a schematic diagram showing a first mowing scenario;
Figure 10 is a schematic diagram showing a second mowing scenario;
Figure 11 is an illustration of an anchor in accordance with one embodiment of the present invention;
Figure 12 is a schematic diagram showing a third mowing scenario;
Figure 13 is a schematic diagram showing a third mowing scenario;
Figure 14 is a schematic diagram showing a fourth mowing scenario;
Figure 15 is a diagram illustrating a typical garden with numerous obstacles;
Figure 16 is a schematic diagram showing a fifth mowing scenario;
Figure 17 is a schematic diagram showing a sixth mowering scenario;
Figure 18 is a schematic diagram showing a sixth mowering scenario; and
Figure 19 is a schematic diagram showing an alternative mowing scenario, in which the mower is located with reference to only two of the anchors.

### DETAILED DESCRIPTION OF THE PREFERRED EMBODIMENT

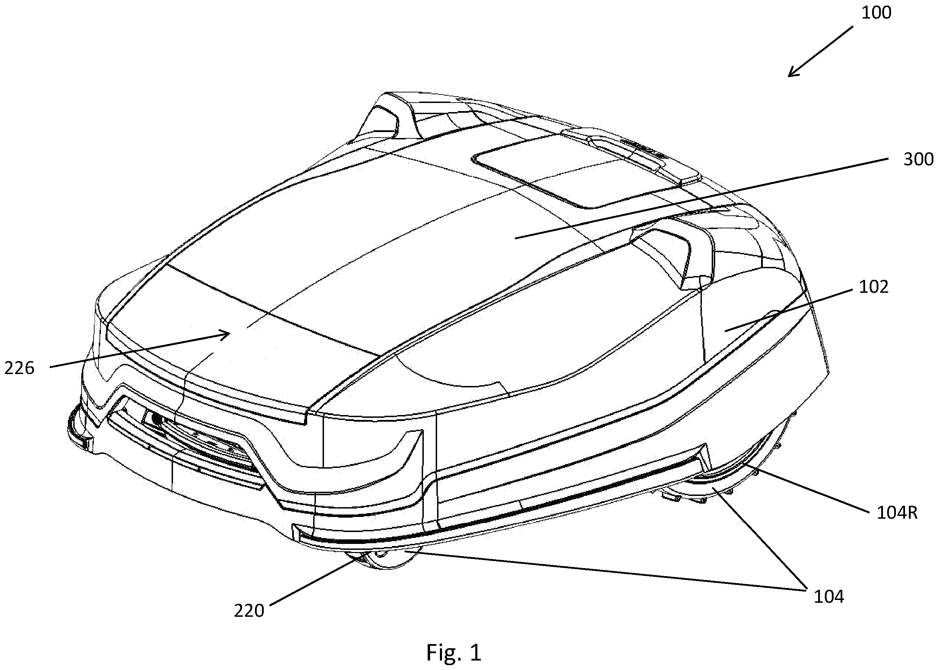

With reference to Figures 1 to 19, there is provided an illustration of a navigation system 200 for use in an autonomous tool 100, comprising: a plurality of anchors 20 disposed separately on a terrain 10 each arranged to emit an electromagnetic signal 22; a signaling module 300 including a signal receiver 310 arranged to receive the electromagnetic signal 22, wherein the signaling module 300 is connected to the autonomous tool 100 arranged to move on the terrain 10; and a processor 400 arranged to process the electromagnetic signal 22 received by the signal receiver 310 so as to determine a physical distance between the signaling module 300 and each of the plurality of anchors 20; wherein the processor 400 is further arranged to determine a current position of the signaling module 300 with respect to a reference position on the terrain 10 based on the determined physical distances and map data of the terrain 10 associated with a position of each of the plurality of anchors 20.

In this example, the autonomous tool 100 may be incorporated as an outdoor tool such as an autonomous lawn mower 100 arranged to operate on a lawn or grass grown surface so as to cut the grass. This action is commonly known as "mow the lawn" and is often undertaken by gardeners and landscape workers to maintain a lawn surface. The term autonomous lawn mower 100 may also include any type of grass cutting device or lawn mower which can operate autonomously, that is, with minimum user intervention. It is expected that user intervention at some point is required to set up or initialize the mower or to calibrate the mower with specific commands, but once these procedures have been undertaken, the mower 100 is largely adapted to operate on its own until further commands are required or if servicing, calibration or error correction is required. Accordingly, autonomous lawn mowers 100 may also be known as automatic lawn mowers, self-driven lawn mowers, robotic lawn mowers or the like.

In this embodiment as shown in Figure 1, the autonomous lawn mower 100, or referred to as the lawn mower or mower, includes a frame or housing 102 which supports the operating components of the mower 100. These operating components may include, without limitation at least one motor, such as an electric motor, which is arranged to drive the blades of the mower so as to cut the grass of a lawn to which the mower is mowing. The at least one motor may also be used to drive the mower itself via the means of transmission systems, such as gearing mechanisms or gearboxes which transmit a driving force to its wheel arrangements 104, although preferably, as is the case of this embodiment, separate motors are used to drive the mower along its operating surface with each rear wheel 104R having its own individual motor and gearbox. This is advantageous in that manoeuvring the mower may be implemented by simple control of each of these motors. It is important to note that the term wheel arrangements may also include driving arrangements that are formed from various different types and combination of wheels, including tracks (such as in tank tracks), chains, belts (such as in snow belts) or other forms of driving arrangements.

In other examples, the term autonomous tool may include other outdoor tools such as snow throwers, electric or gas blowers, landscaping tools, multi-function outdoor equipments, portable generators, pressure washers, pumps, soil care, watering e.g. hoses, fertilisers, or soil investigating tools. In some other examples, the term autonomous tool may also include any indoor tools such as vacuum cleaners, fans, air filters, or portable heaters.

Preferably, as shown in the embodiment of Figures 1 to 2, the mower 100 includes a navigation system 200 which operates to locate and navigate the mower 100 around a working area 10 so that the mower 100 can cut the grass of a working area 10. The navigation system 200 may include a number of specific navigation modules each arranged to provide individual navigation information obtained for the mower 100. In turn, the navigation information obtained or determined by each of these navigation modules are then returned to the navigation system 200 for transmission to a controller 400. Upon processing of the navigation information by the controller 400, the controller 400 may then generate commands which are used to control the movement and operation of the mower 100 within a work or operation area 10.

These navigation modules may include at least the follow:
- A signaling module 300 having a signal receiver 310 arranged to communicate with a plurality of anchors 20 positioned separately on a terrain 10 each arranged to emit an electromagnetic signal 22 so as to assist in the determination of the location of the mower 100 with respect to a reference point;
- An odometry module 220 arranged to determine the distance travelled by the wheels 104 so as to assist in the determination of the location of the mower 100 from a starting point;
- An inertial measurement unit (IMU) module 226 arranged to measure the force of movement of the mower 100 by detecting and recording various forces which are subjected on the mower 100, including the direction of movement, force of movement, magnetic bearing of movement, acceleration and gyroscopic movements. In some example implementations, more than one IMUs 226 may be used to improve accuracy, since additional IMUs 226 will assist in eliminating errors over time
- Other additional navigation modules (not shown) may also be implemented to communicate with the navigation system so as to provide further input to the navigation system to adjust and control the mower, for example, GPS sensor 222 which can be used to obtain a GPS coordinate of the mower 100 and obstacle detection module 224 which can be used to prevent the mower 100 from crashing into an obstacle.

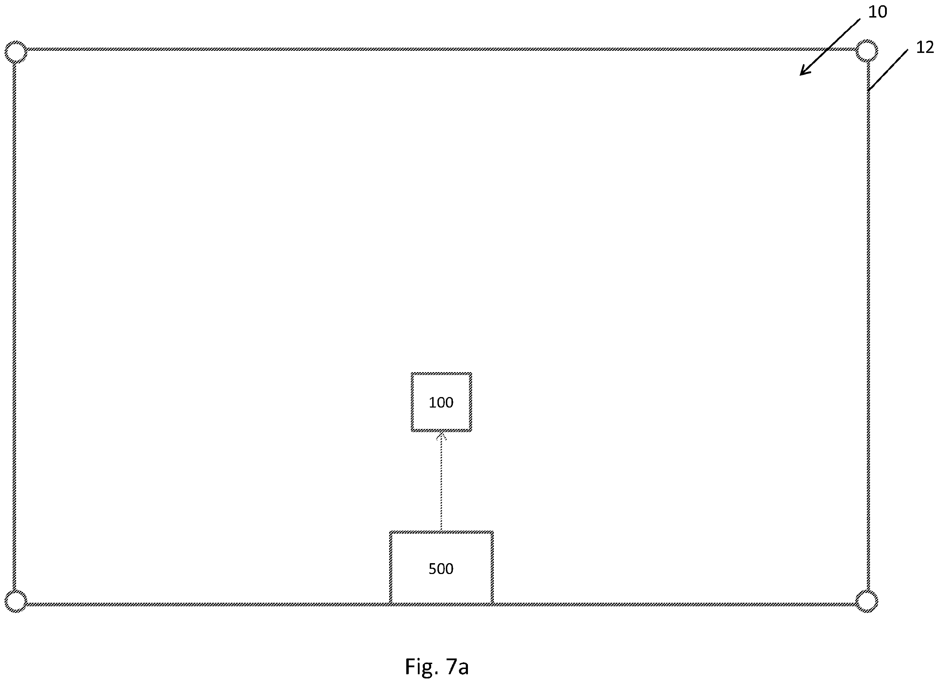

These navigation modules are each arranged to obtain, detect and determine a set of navigation related information, which are in turn arranged to be processed by a processor 400 on the controller to devise suitable commands to operate the mower 100. As it will be explained below with reference to Figures 7a to 8b, in one example, the autonomous lawn mower 100 will operate by starting from a docking station 500 which will form a start and return point for the mower 100. The mower 100, when departing the docking station 500 may then use the navigation system 200 to assist with navigating the mower 100 around a work or operation area 10 by cutting the lawn in the operating area 10, and then proceeding to navigate its way back to the docking station 500.

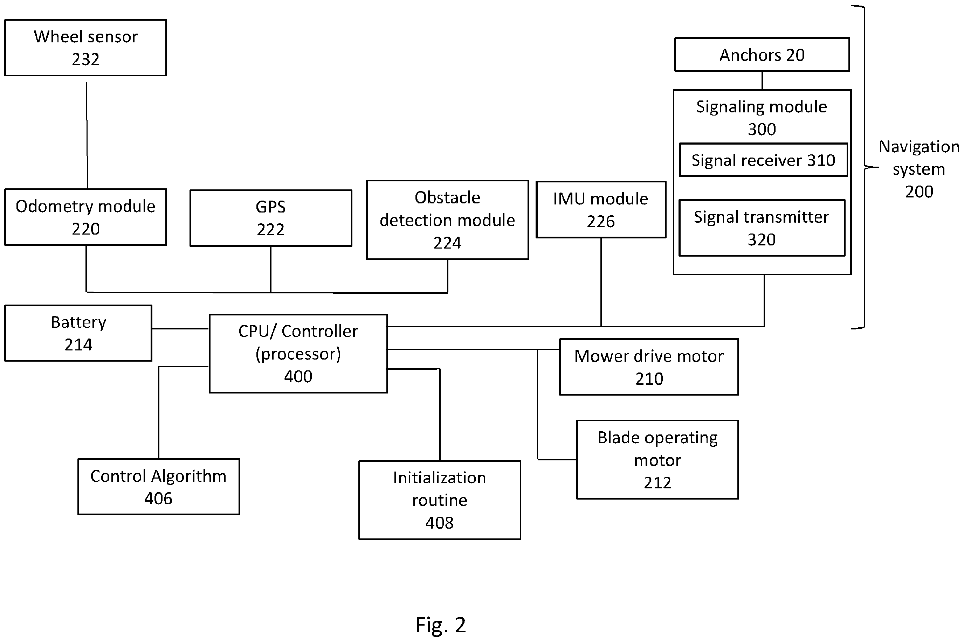

With reference to Figure 2, there is provided a block diagram of the autonomous lawn mower 100 which illustrates the essential components of the autonomous lawn mower 100. In this embodiment, the mower 100 includes a controller/processor 400 which may be implemented as a computing device, or as one or more control boards, with each having one or more processors 400 arranged to receive and analyse the information received and to provide instructions to the mower 100 in order to operate the mower 100. Preferably, the controller/processor 400 is implemented with a main printed circuit board assembly (PCBA) arranged to have two processors on the PCBA and to operate together with an additional computing module. Several of the sensor PCBAs may also have their own individual microcontroller units (MCUs).

The controller/processors 400 is arranged to receive navigation information from the navigation system 200 of the mower 100 and in turn, upon the receipt of this navigation information, will process the navigation information with existing information already accessible by the controller 400 such as the control algorithm 406 or predefined map of the operating area to generate various commands to each of the mower operating components, including the drive motors 210 arranged to drive the mower and/or the blade motors 212 which operates the blades.

The navigation system 200 includes the signaling module 300, the odometry module 220 which includes wheel sensors 232 to detect the rotational displacement of the wheels of the mower 100, and the IMU unit 226.

The signalling module 300 includes a signal receiver 310 for receiving a signal embedded with the relative position of the mower 100 with respect to a reference position from a signal source. To facilitate the receipt of signal, the signalling module 300 also includes a signal transmitter 320 for emitting a trigger signal to request or trigger the transit of such signal from the signal source to the signalling module 300.

Preferably, the signal source may share a similar or identical construction with the signalling module 300 and may be incorporated as an anchor 20 which receives a trigger signal from the signal transmitter 320 of the signalling module 300 and in turn, emits a signal associated with the relative position of the mower 100 with respect to a reference position to the signal receiver 310 of the signalling module 300.

Although the signalling module 300 may be accurate in determining the position of the mower 100, IMU 226, odometry sensor 232 and optionally GPS sensor 222 serve as additional sensors for providing supplementary information associated with the mower 100 to improve the accuracy of the positioning.

The odometry module 220 may be implemented into each of two motors arranged to drive the rear wheels 104R of the mower 100. For instance, the odometry module 220 is provided one or more absolute encoders or encoder sensors to measure the number of rotations of the wheels 104R to which the odometry module 220 is implemented to operate with. In turn, the number of rotations, when coupled with the circumference of the wheel 104R will provide an estimation as to the distance travelled by the mower 100 on a work surface (taking into account any gear ratios, if applicable). As the mower 100 may also turn along its work surface by allowing its opposing wheels to spin in opposite directions, such movements and rotation can also be detected and measured so as to determine the direction and rate of turn of the mower 100 along a work surface.

Once the number of rotations is determined, the number of rotations of each wheel 104R, including its direction and whether the wheels 10R are undergoing a turning direction, will then be transmitted to the controller 400 for processing. In turn, the controller 400 can then process this result with other information from the navigation system 200 to ascertain the location of the mower 100.

On the other hand, the IMU module 226 may be implemented to measure the force of movement of the mower by detecting and recording various forces which are subjected to the mower 100. For instance, the IMU 226 detects and records various forces which are subjected on the mower 100, including the direction of movement, force of movement, magnetic bearing of movement, acceleration and gyroscopic movements. Preferably, the IMU 226 functions by using at least one accelerometer to detect the rate of acceleration or deceleration of the mower, at least one gyroscope to detect the gyroscopic movements of the mower and a magnetometer to detect the magnetic bearing of movement of the mower.

The controller 400 may receive the navigation information detected by the IMU module 226. Following processing by a processor 400, suitable commands to operate the mower 100 can be developed based on the navigation information supplied by the IMU module 226.

Each of these modules are arranged to provide a specific function and return individual navigation information either detected, calculated, gathered or surveyed, as in the case of the signalling module 300 which is arranged to receive electromagnetic signal 22 emitted by one or more anchors 20.

As illustrated in this embodiment, the controller 400 is also arranged to control the mower drive motors 210 to drive the mower 100 along a work surface within a work area. Preferably, as is the case in this embodiment, the mower 100 is driven by having a motor 210 placed adjacent to each of the rear wheels 104R with each motor 210 being arranged to drive each rear wheel 104R.

In turn, the controller 400 can direct electric current from a power source, such as a battery 214, to the motors 210 so as to perform a controlled operation of one or both motors 210. This can allow for forward, reverse and turning actions of the mower 100 by turning one or more wheels at different speeds or directions.

The controller 400 can also command the blade motor 212 to operate so as to operate the blades to cut the grass of a work surface. To perform these functions, the controller 400 will execute a control routine or process 206 which determines the conditions for and when the mower 100 is to be operated. These commands at least include instructions to command the direction of travel of the mower 100 and the operation of the blades 212.

Other commands are also possible, including the command of the mower 100 to travel to a particular location within a work area, or to return to a specific location, such as a docking station 500 as well as specific commands such as the operating speed of the blade motor 212 or the height of the blade 212 so as to determine the level of grass that is cut.

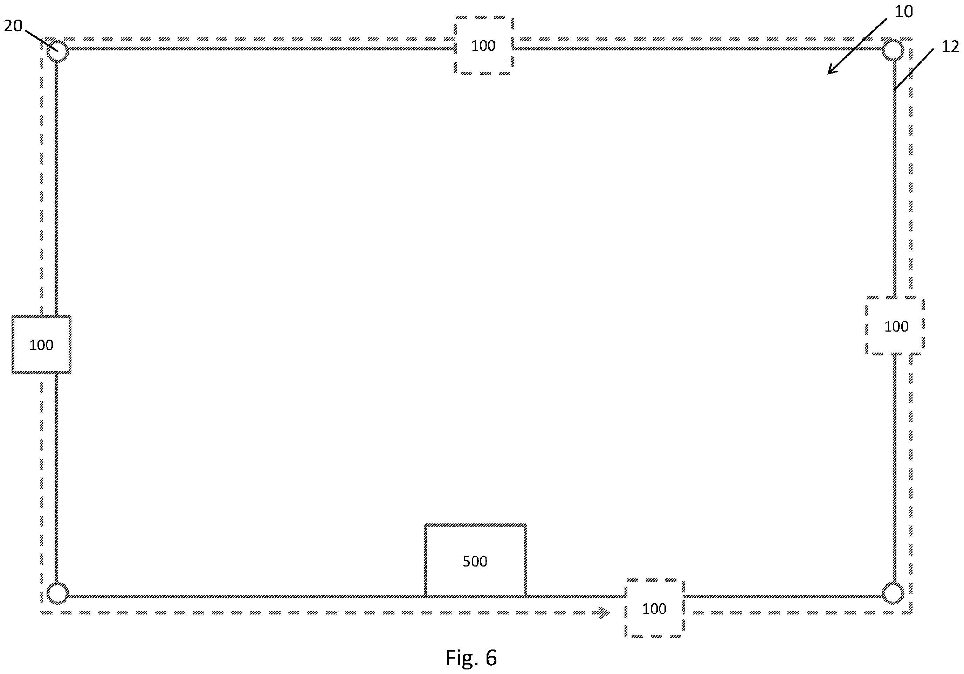

As it will be explained below with reference to Figure 6, the controller 400 may also be pre-programmed with an initialization routine 408 wherein the mower's working area and work surfaces 10 are initially identified. These process may assist in identify the boundaries of a working area and the categorization that certain surfaces within the boundaries 12 should be avoided (no travel zones) or should not have the blade motor activated 212. Once these working areas 10 are identified, the mower 100 can then be controlled by the controller 400 to navigate to a starting point from the docking station 500, wherein the mower 100 can proceed to cut the grass from the starting point as stipulated by the control algorithm 406.

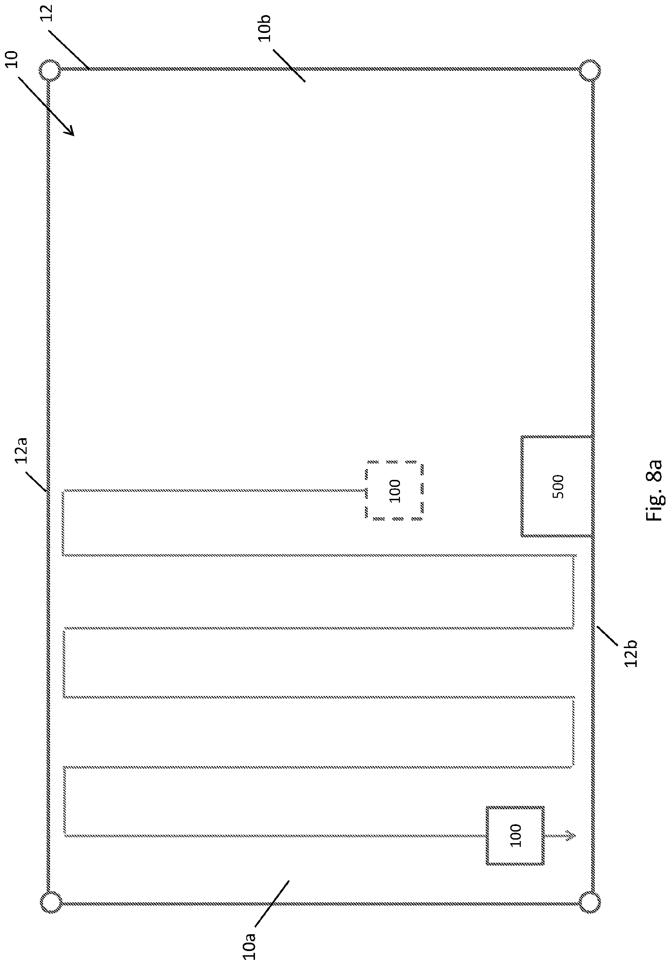

For instance, the control algorithm 406 may include a specific cutting program, which mows the lawn 10 along a travelling path e.g. along a longitudinal axis and then work each longitudinal axis in a latitudinal form within the working area defined so as to cut the grass in the working area 10 which is bounded by a predetermined boundary 12. More specifically, the working area 10 may be covered by the mower 100 via a travelling path determined based on an A* pathfinding process or a flood-fill cutting algorithm as will be explained below with reference to Figures 8a to 8b. Other cutting programs are also possible and can be chosen base on the shape and profile of the working area 10 of the desired operation of a user.

Preferably, as the controller 400 will communicate with each of the navigation modules of the navigation system 200, the controller 400 may, during initialisation and general operation, receive a large amount of different navigation information from each of these navigation modules. In order to process this navigation information so as to determine operation commands for the mower 100, the controller 400 may first apply a filter or an averaging function to all of navigation information received from the navigation system 200. Such a filtering function may allow the controller 400 to ignore or minimize any weighting placed on navigation information obtained from a first navigation module that appears to be incorrect when compared with navigation information obtained from other navigation modules. One or more filters can be applied to assist with identifying a "best fit" trend for all navigation information received by the controller 400 and in turn, allowing anomalies, deviations or inconsistencies, which may be far away from the average or best fit trend, to be ignored or further investigated.

As an example, the controller 400 may receive navigation information from the signaling module 300 and the odometry module 220. During processing, the odometry module 220 may have tracked that the mower 100 has travelled to a particular position with respect to a reference position on the terrain 10. However, according to the navigation information obtained by the signaling module 300 and IMU 226, the location of the mower 100 may be at a distance substantially far away from the co-ordinates obtained from the odometry module 220. In these instances, when the filtering function is applied to all navigation information of the signaling module 300 and the odometry module 220, the "best fit" or "average" may in turn indicate that the co-ordinates of the odometry module 220 is an anomaly, as it is completely inconsistent with the other navigation modules. Accordingly, the controller 400 may then proceed to ignore this anomaly in generating commands to the mower 100.

It is also expected that the controller 400 may also apply a similar filtering function to all data obtained from the navigation system 200 and other sensors such as GPS sensors 222, obstacle detection module 224 etc. Such filter may be advantageous for reducing/eliminating bad data points from each source and to assist in determining which sources of navigation/localization data are most reliable and use select these sources instead.

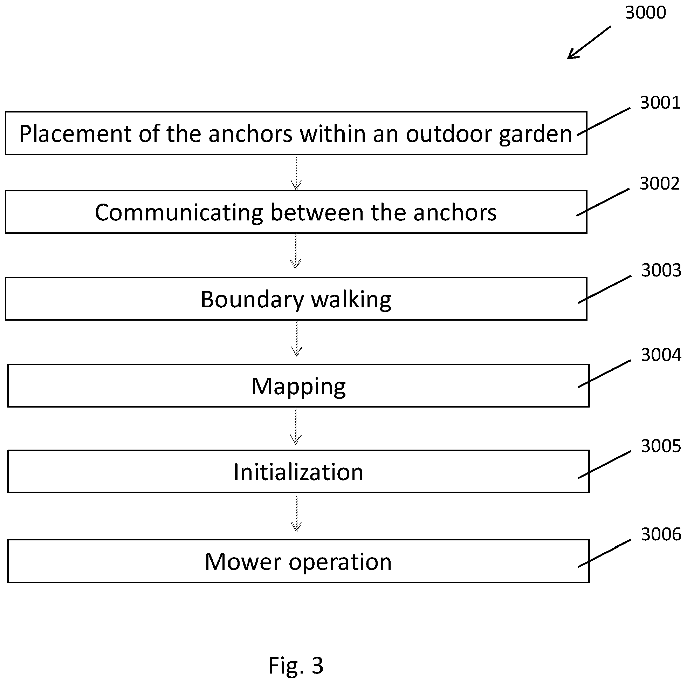

With reference to Figure 3, there is shown a flow chart illustrating an example embodiment of a process flow 3000 of operating the autonomous lawn mower 100. The operation may begin with step 3001 of placement of the plurality of anchors 20 at a predetermined position within an outdoor garden 10.

A user/operator may place the plurality of anchors 20 to define a physical area 10 for operating the mower 100. In one example, the user may simply place the anchors 20 along the perimeter of the terrain 10. In other words, the anchors 20 may be placed to form a polygonal area for mowing operation. Preferably, the user/operator may also place additional anchors 20 to surround any particular area within the terrain area 10 according to specific needs e.g. accommodating signal blind spot within the terrain 10.

In one example, the anchors 20 may be directly inserted onto the terrain area 10 and then being activated by the user through a switch on the anchors 20 or through a remote computing device such as a mobile phone that is wirelessly connected to the anchors 20. In another example, the anchors 20 may be inserted to a plurality of sleeves that are predefined on the terrain 10. In this way, the anchors 20 are in electrical communication with a power supply e.g. a battery positioned at the sleeves.

Upon the anchors 20 are positioned at the desirable positions and switched on, the anchors 20 may communicate with each other to indicate their respective position within the terrain area 10 by sending electromagnetic signals 22 to or receiving electromagnetic signals 22 from each other at step 3002. Such signals 22 may also be transmitted from the anchors 20 to the computing device such that the individual position of the anchors 20 may be visually or graphically displayed on the remote computing device.

The position of the anchors 20 may together ideally define a preliminary boundary. However, there may be some obstacles located in between the area or the terrain 10 may not be exactly in regular shape. To fine-tune the preliminary boundary, the user may collect map data of the terrain 10 by moving the mower 100 around the terrain 10 to generate map data at step 3003 for determine the mowing area 10. By doing so, the mower 100 can then be taught by the user as to the location and definition of the working area 10 as well as any travel paths which are required to cover different portions of the working area 10.

In one example, the user may firstly manual operate the mower 100 along the perimeters of one or more operation areas 10 so as to teach the mower 100 the operation areas 10 which are needed to be mowed by the mower 100. This may sometimes be referred to as the "boundary-walking mode", representative of a user in "walking" the mower along the boundary 12 of an operation area 10.

For instance, the mower 100 can be operated in this mode by using a computing device such as a mobile phone, a remote or a handheld controller that is wirelessly connected to the mower 100. The user may start to issue commands to the mower 100 to drive the mower 100. These commands are received and processed by the controller 400 so as to drive the mower 100 along a surface.

In one example, the mobile phone may further include an application or an interface that allow the user to drive the mower 100 along the perimeters 12 of the operating surface 10 whilst the position of the mower 100 may be instantaneously displayed on the application or the interface to the user.

When the user drives the mower 100 along these perimeters 12, the mower 100, which would be in the boundary-walking mode, may then operate its navigation system 200 so as to continuously collect navigation information associated with its proximate environment. This may include, for example, the odometry module 220 in recording the distance of travel as well as the direction of travel, the IMU 226 in measuring the direction of travel, and any other navigation modules or sensors (e.g. GPS 222, obstacle detection module 224 etc.) which may contribute towards refining the navigation information.

Once the boundary-walking process is completed, the processor 400 may then generate map data based on the collected navigation information at step 3004 for using in subsequent normal autonomous operation. Such stored navigation information, which may be presented in the form of a virtual map, may then be processed by the mower 100 with live navigation information that is obtained in real time by the navigation system 200 during normal mower operation to devise the location of the mower 100 when in operation.

Before the normal mowing operation starts, the mower 100 enters an initialization mode to determine its orientation with respect to the map data at step 3005. This is of great importance as the mower 100 must first align its coordinate system with that stored in the map data or else the mower 100 may travel to a position outside the boundary 12.

In one example embodiment, the mower 100 may be in one position within a mowing area 10 bound by the plurality of anchors 20 being positioned by the user. The mower 100 may first travel a predetermined short distance such as 0.5 to 1 meter along a first direction. The mower 100 in the initialisation mode is only allowed to move for a minimal distance that may be detectable by the anchors 20. This prevents the mower 100 from running out of user control and consequently hitting any obstacles before the matching of the two coordinate systems is successful.

The signal receiver 310 of the mower 100 may then receive an electromagnetic signal 22 transmitted from each of the positioned anchors 20. These signals 22 are processed by the processor 400 of the mower 100 so as to determine an initial position of the mower 100 with respect to one or more of the anchors 20 whereas the position of that particular anchor 20 is regarded as a reference position.

Once the initial position of the mower 100 is determined, the processor 400 will command the mower 100 to rotate from the initial direction i.e. first orientation to another direction i.e. second orientation. Preferably, the first and second directions are perpendicular to each other. The mower 100 may then travel another predetermined short distance such as 0.5 to 1 meter along the second direction to reach another position.

After travelling to the current position, the signal transmitter of one or more anchors 20 at the reference position sends another signal 22 to the mower 100. The signal receiver 310 of the mower 100 receives and processes the signal 22 transmitted from that anchor 20 so as to determine the current position of the mower 100 with respect to that particular anchor 20.

By comparing the initial position and the current position of the mower 100 with respect to the reference position, the processor 400 of the mower 100 will determine the orientation of the mower 100 with respect to the virtual map. The user may then begin the normal mowing operation at step 3006.

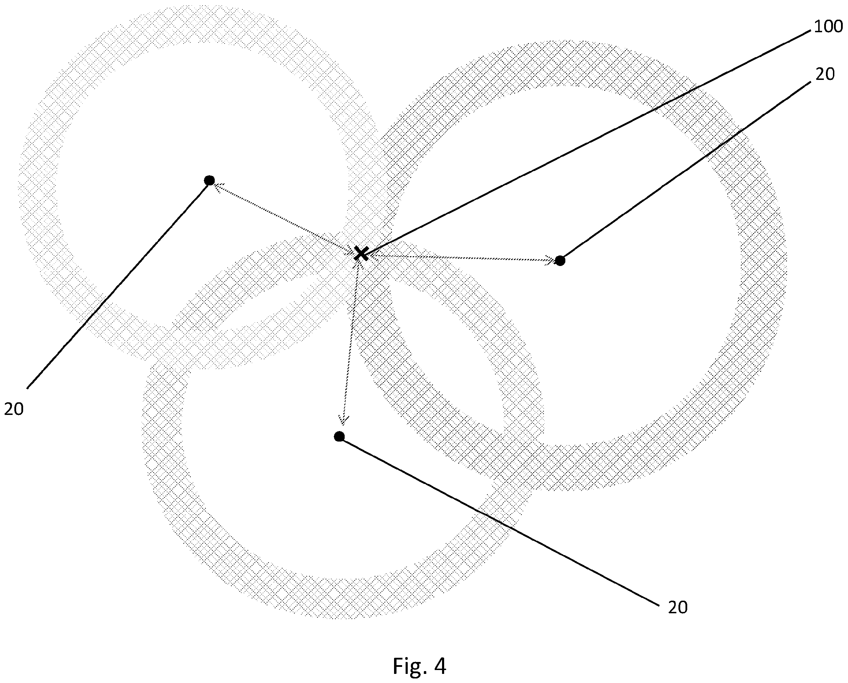

With reference to Figure 4, there is shown a schematic diagram illustrating how a mower 100 localizes its position through multiple anchors 20 with known positions. As shown, there is provided with at least three anchors 20 positioned in an area 10 and a mower 100 arranged in an area 10 bound by the anchors 20. Each of the anchors 20 and the signaling module 300 of the mower 100 may include a pair of signal transmitter and signal receiver for transmitting an electromagnetic signal to the other anchor 20 or the signaling module 300 and for receiving another electromagnetic signal emitted by or same electromagnetic signal reflected by another anchor 20 or the signaling module 300 respectively.

In one example, each of the anchors 20 will send an electromagnetic signal 22 to the receiver 310 of the mower 100. The electromagnetic signal 22 may include ultrawide band radio frequency signal, laser signal, infrared signal etc.

Preferably, the electromagnetic signal 22 used in the present invention may be an ultrawide band radio frequency signal in a frequency range of 6 to 8.5 GHz and travelling at speed of light 3 x 10⁸ ms⁻¹. The advantages of using ultrawide band radio frequency over other types of electromagnetic signal in that, the ultrawide band radio frequency signal may deliver a more precise accuracy up to 10 to 20 cm. Furthermore, the low latency time of ultrawide band radio frequency signal means that the position scan can be repeated up to 100 times per second and thus this is particular suitable for real time positioning applications such as the present mower application.

The anchors 20 may emit continuous signal strings in a predetermined period. Alternatively, the anchors 20 may only emit a single signal upon triggered by receiving a trigger signal. For instance, the anchors 20 may receive a trigger signal from the mower 100 and in response to the trigger signal, send another signal to the mower 100. Once the signals are received, the processor 400 of the mower 100 will retrieve data relating the time for the signals propagate to the mower 100. With reference to the propagation speed of the signal, the physical distances of the mower 100 with respect to each of the anchors 20 may be determined and in turn, the position of the mower 100 can be calculated by trilateration and/or triangulation.

In one specific example, the position of the mower 100 may be determined by a time-of-flight method. The mower 100 may send a triggering signal 22 to the anchors 20 so as to determine the propagation time of such trigger signal 22. After receiving the triggering signal 22, in turn, the anchors 20 may send a signal 22' back to the mower 100 and obtain another propagation time. In this way, the mower 100 obtains a triggering signal propagation time period for the triggering signal 22 travelling from the mower 100 to the anchor 20 and a signal propagation time period for the signal 22' travelling from the anchor 20 back to the mower 100. Based on the speed of the signal 22, 22'and the signal propagation periods, the physical distance of the mower 100 with respect to each of the anchors 20 may be determined and thus, the position of the mower 100 may be calculated by trilateration and/or triangulation.

In yet another example, the position of the mower 100 may be determined by a time-difference-of-arrival method. In this method, a signal 22 may be sent by the mower 100 to each of the anchors 20 whilst the anchors 20 will not send a signal back to the mower 100. Owing to the different distances of the mower 100 with respect to each of the anchors 20, there are time differences for each anchor 20 to receive the signal 22 sent by the mower 100. The physical distance and therefore the location of the mower 100 may be calculated by multilateration.

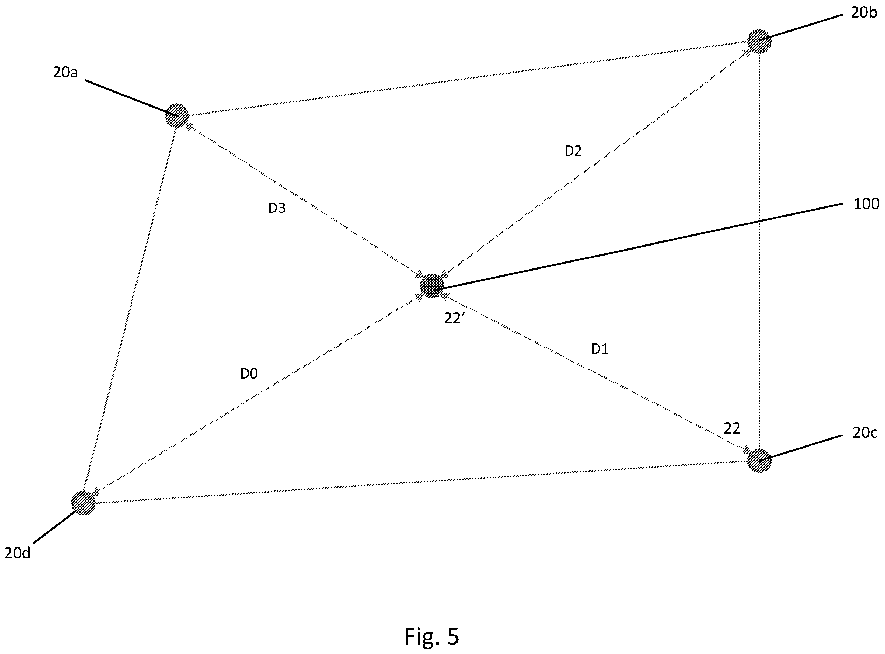

With reference to Figure 5, there is illustrated an example embodiment of determining the location of a mower 100 in a terrain area 10. As shown, there are four anchors 20a, 20b, 20c, 20d positioned in the terrain area 10 defining a polygonal mowable area. Within which, there is a mower 100 awaiting localisation of its position based on the anchors 20a to 20d. Such operation may be initiated by a user/operator through an application on an electronic device (e.g. a mobile phone) that is wirelessly connected to the mower 100.

Upon the operation is initialised, the anchors 20a to 20d communicate with each other using, for example wideband, ultrawide band, laser, infrared (represented by the solid line) to establish their respective reference position. Once the reference positions of the anchors 20a to 20d are determined, the mower 100 may send an electromagnetic signal 22 such as an ultrawide band radio frequency signal to any three of the anchors 20a to 20d, for example, the three adjacent anchors 20a to 20c. The anchors 20a to 20c receive the signals 22 and then return signals 22' to the mower 100. When the mower 100 receives the returning signal 22', the processor 400 of the mower 100 may calculate the physical distance of the mower 100 with respect to a particular anchor e.g. 20a based on the time required for the signal 22 to travel from the mower 100 to the anchor 20a and to travel back to the mower 100 together with the speed of the signal 22.

For example, assume that the time at which an ultrawide band radio frequency signal 22 travels from the mower 100 to the anchor 20a is 11 and the time at which an ultrawide band radio frequency signal 22' travels from the anchor 20a back to the mower 100 is t2, the physical distance D1 between the mower 100 and anchor 20a would be determined by the speed of the signal 22 multiplied by (t2-t1). By this way, after obtaining at least three physical distances e.g. D1, D2, D3, the position of the mower 100 may be calculated by a trilateration and/or triangulation.

Although the use of three anchors 20 is sufficient to provide an accuracy positioning of the mower 100, the fourth anchor 20 serves as a back up to verify the position of the mower 100. For instance, the position of the mower 100 as calculated by the trilateration and/or triangulation may be verified based on the communication between the mower 100 and the additional anchor 20d e.g. the anchor furthest away from the mower 100.

In addition, the use of the fourth anchors 20d may also be useful for measuring the three dimensional position of the mower 100, which includes the relative vertical position of the mower 100 with respect to the reference position i.e. the horizontal level of the anchors 20. This is of particular importance, as the mowing surface may somehow be uneven and the mower 100 may be slightly inclined with respect to the mowing ground.

Referring again to Figure 5, the position of the mower 100 may be determined by the communication between the mower 100 and the anchors 20a to 20c based on the method discussed above. To verify the position of the mower 100, the mower 100 may send a signal to the additional anchor, for example anchor 20d in this case, which in turn transmits the same signal or another signal back to the mower 100 so as to determine a time that the signal propagates back and forth between the mower 100 and the anchor 20d.

In turn, a physical distance D0 is determined based on the speed of the signal 22 and the propagation time of that signal 22. The processor 400 of the mower 100 may compare the estimated distance between the mower 100 and the anchor 20d based on the stored map data of the terrain 10 associated with the communication between the mower 100 and the anchors 20a to 20c with the determined distance D0 between the mower 100 and the anchor 20d for verification. This may be advantageous when the mower 100 is operated in an irregular mowable area which requires enhanced navigation accuracy.

With reference to Figure 6, there is illustrated an example process for operating the mower 100 in a boundary-walking mode. In this example, the initialisation process or routine 408, is a set of procedures which may be performed by a user so as to preconfigure the mower 100 for self-operation in a work area.

As shown, there is provided a mowable area 10 as defined by a plurality of anchors 20 positioned at the corners of the area 10. There is also a docking station 500 arranged at the bottom of the mowable area for storing and recharging the mower 100. The initialization may be implemented by manually teaching the mower 100 the working area/boundary 12 for working.

In one example, a user/operator may stand or sit at a position near the docking station 500, although it would be appreciated that the user/operator stands or sits at any other positions is also possible. The user may use a computing device, a virtual controller, or a remote to control the mower 100 to move out from the docking station 500. Preferably, the computing device is a mobile device such as a mobile phone, laptop, smart watch, etc. that is wirelessly connected to the mower 100 and include an application for controlling the mower 100.

After the mower 100 sets off from a starting position e.g. the docking station 500, the user may control the mower 100 to move along the perimeters of one or more operation areas 10 so as to teach the mower 100 the operation areas which are needed to be mowed. Optionally, the user may follow the mower 100 during this teaching process so as to monitor the operation path of the mower 100 tightly and avoid crashing the mower 100 into any obstacles therebetween.

When the user drives the mower 100 along these perimeters, the navigation system 200 may continuously collect navigation information associated with its proximate environment. For instance, the navigation system 200 may active each of odometry module 220 to record the distance of travel as well as the direction of travel, the IMU 236 in measuring the direction of travel, and any other navigation modules or sensors (e.g. GPS 222 or obstacle detection module 224 etc.) which may contribute towards refining the navigation information to achieve a more accurate positioning of the mower.

During the boundary walking process, the mower 100 is in signal communication with the anchors 20. Preferably, the signal strength of the anchors 20 at various positions on the boundary 12 may be continuously determined by the signalling module 300. Any failure of reception of signal 22 emitted from one or more anchors 20 i.e. signal strength below a predetermined threshold would be recorded in the map data of the terrain 10. The map data would be deployed by the navigation system 200 during normal mowing operation.

After walking around the perimeter of the mowing area 10, the processor 400 may process the map data to generate a new map or fine tune the preliminary map data associated with the positions of the anchors 20, and in turn map the initial orientation of the mower 100 with the map or the map data. In one example, the user may use the application included in the mobile device to execute a programme or a procedure stored in the mower for performing the initialization.

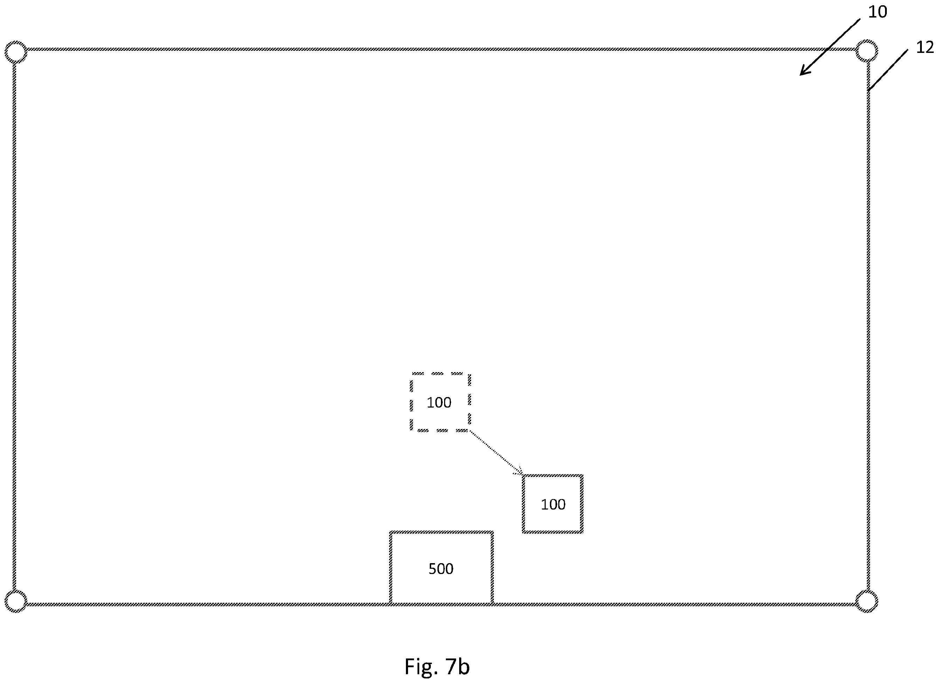

Initially, the programme/procedure may begin with controlling the mower 100 to move out from the docking station 500. After the mower 100 sets off from the docking station 500 as shown in Figure 7a, the mower 100 will receive a signal 22 from the anchor 20 so as to determine an initial position of the mower 100 with respect to the anchors 20. The mower 100 may move for a short distance with a predetermined angle in a first direction to reach a first position as shown in Figure 7b.

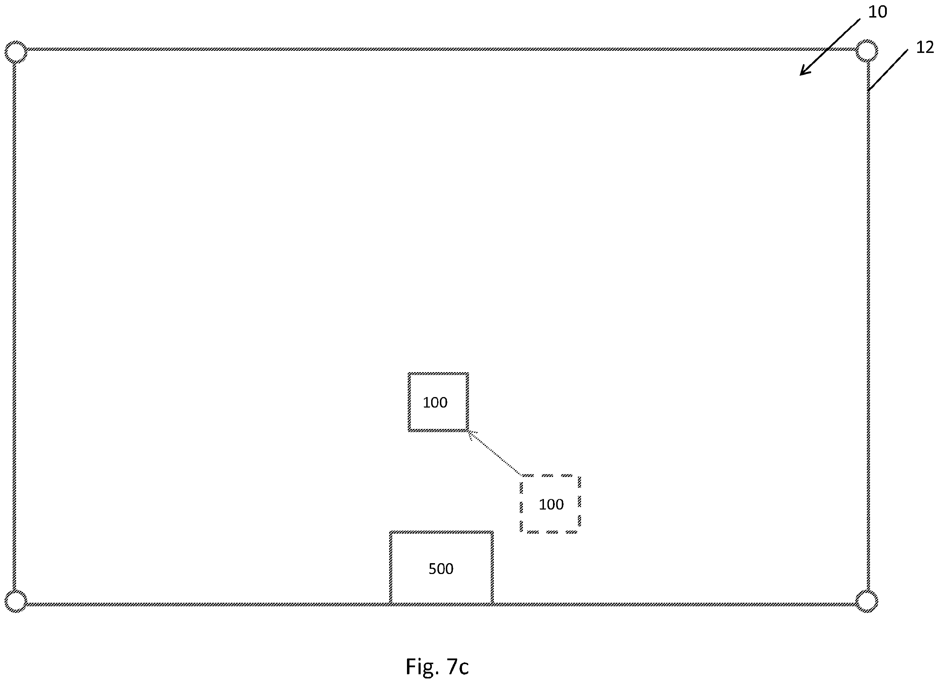

At this position, the mower 100 receives a signal from the anchors 20 which in turn telling the mower 100 how close it is with respect to the anchors 20. After that, the mower 100 returns back to the initial position as shown in Figure 7c. The mower 100 then travels for a short distance with another predetermined angle along another direction that is perpendicular to the direction as shown in Figures 7b and 7c to reach a second position.

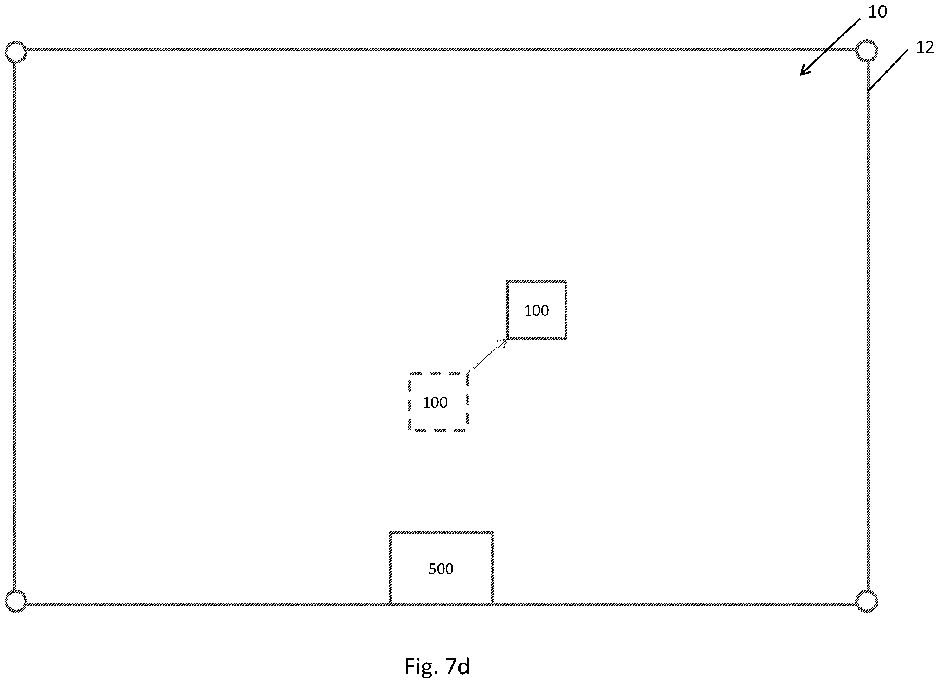

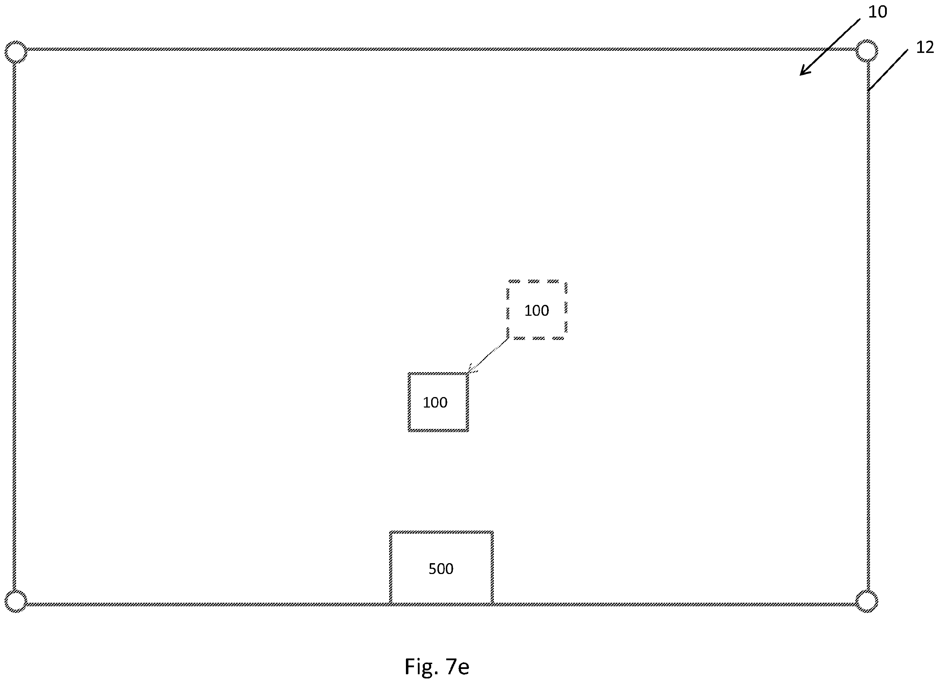

At the position as shown in Figure 7d, the mower 100 receives another signal 22 from the anchors 20 which tell the mower 100 its distance with respect to the anchors 20 at the current position. The mower 100 then returns back to the initial position. Accordingly, the orientation of the mower 100 may be determined by comparing the position data obtained from the two, first and second positions as shown in Figures 7b and 7e with respect to the anchors 20.

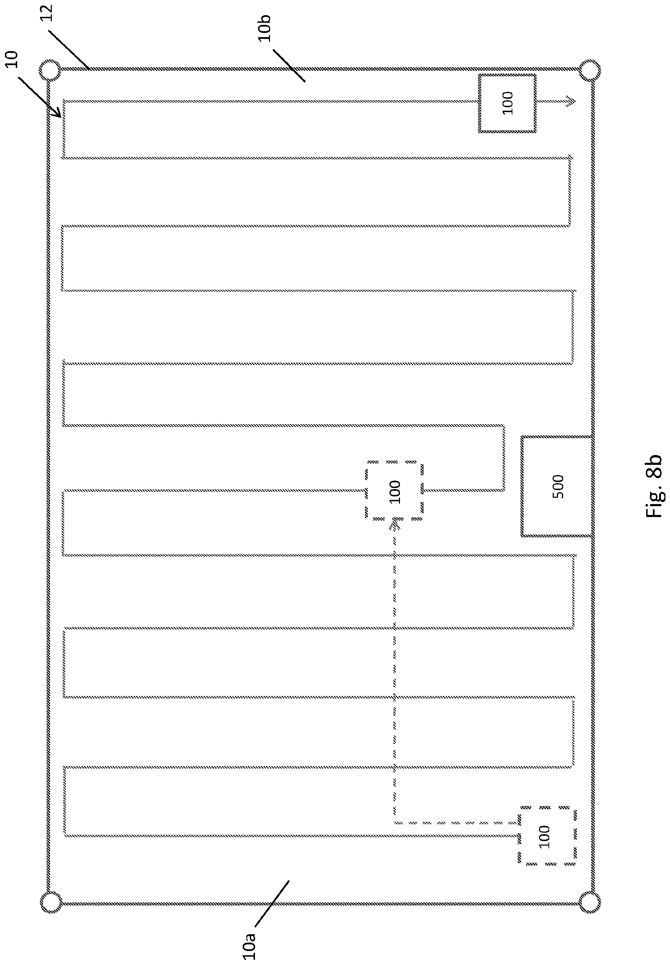

With reference to Figures 8a and 8b, there is shown an example embodiment of how the mower 100 as successfully initialized in Figures 7a to 7e may move around the mowable area to perform the normal mowing operation. As shown, the mower 100 may start moving at an initial position as described in Figure 7a. The mower 100 moves forwards with respect to the docking station 500 until it reaches the boundary 12 as previously determined by the boundary-walking process as shown in Figure 6.

Once the mower 100 reaches the first end 12a of the boundary 12, it rotates by 90 degrees e.g. counter clockwise twice and travels in an opposite, rearward direction for a predetermined distance until the mower 100 reaches the other end 12b of the boundary 12. The mower 100 then rotates by 90 degrees clockwise twice and travels in a forward direction again for a predetermined distance until it reaches the first end 12a of the boundary 12 again. The mower 100 repeats these steps to cover half of the mowable area 10 until the half of the area 10 is flood filled by the forward traveling path of the mower 100.

As the starting position of the mowing operation is located somewhere at the central portion of the working area 10, the mower 100 travelled along the travelling path as described above would have only covered half of the working area 10a. In order to flood-fill the rest of the working area 10b, the mower 100 will return to the initial position once it finishes the travelling path as shown in Figure 8a.

As shown in Figure 8b, after the mower 100 returns to its initial position, the mower 100 will move in the same manner in the remaining working area 10 but in an opposite direction until the remaining area 10b is covered by the mower 100. Finally, the mower 100 may return to its initial position and dock into the docking area 500 to terminate the mowing operation and/or for battery charging.

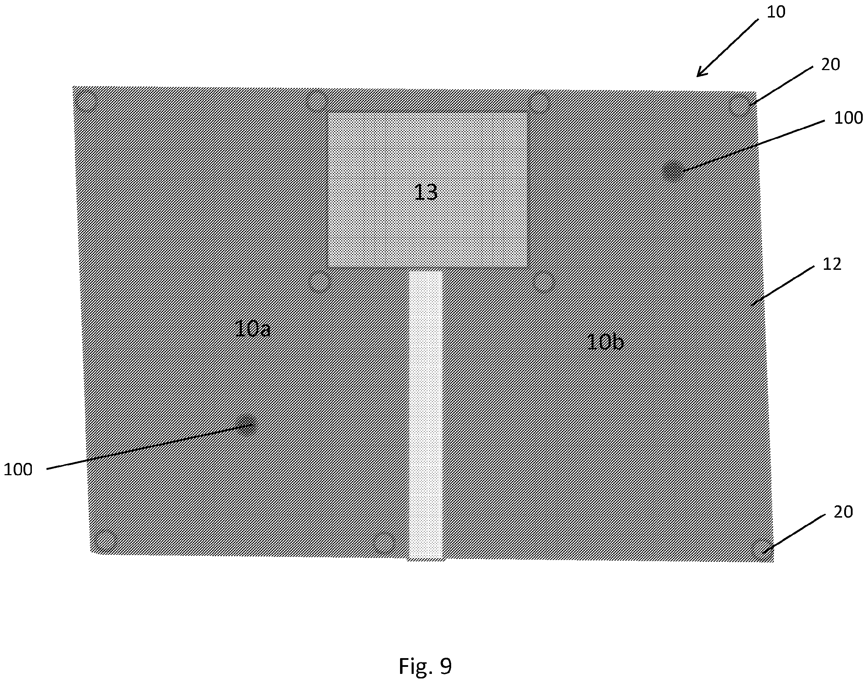

With reference to Figure 9, there is illustrated an example embodiment of an area 10 to be mowed. In this example, the area 10 is of a polygonal shape. Within the area 10, a house 13 with a barrier connected thereto is provided at the centre portion of the area 10, which in turn dividing the area 10 into two sub-areas 10a and 10b. To mow these sub-areas 10a and 10b, a user may first manually place a plurality of anchors 20 along the perimeter of the sub-areas 10a and 10b. The anchors 20 may communicate with each other using different electromagnetic signals 22 such as ultrawide band radio frequency signal, laser signal, infrared signal, or other types of radio-frequency time-of-flight technology, which in turn determining their respective locations.

To initialize the mower 100 for operation, the user may perform the aforementioned boundary-walking process to teach the mower 100 the boundaries 12 for operation. In particular, the user may control the mower 100 to travel along the perimeter of each of the sub-areas 10a and 10b so as to teach the mower 100 the operation areas 10 to be mowed.

During the boundary-walking process, the navigation system 200 of the mower 100 may continuously collect navigation information associated with its proximate environment and such navigation information may be stored in the memory of the mower 100 in the form of a virtual map. The map data associated with the sub-areas 10a and 10b may be transmitted to the computing device and graphically presented to the user which may in turn allow the user to pick the specific operation area 10 to be mowed.

In some example, the user may have more than one mower 100 e.g. two mowers 100', 100" for operation. Each of the two mowers 100', 100" may be placed in each of the sub-areas 10', 10" respectively. The two mowers 100', 100" may be independently in communication with the computing device via wireless connection. The user may define the operation boundaries 12', 12" for each of the mowers 100', 100" by performing a boundary-walking process. After that, the mowers 100', 100" determine their positions and orientation as mentioned above and start mowing their respective area 10', 10" simultaneously. In this way, the operation time for mowing would be saved at least by half.

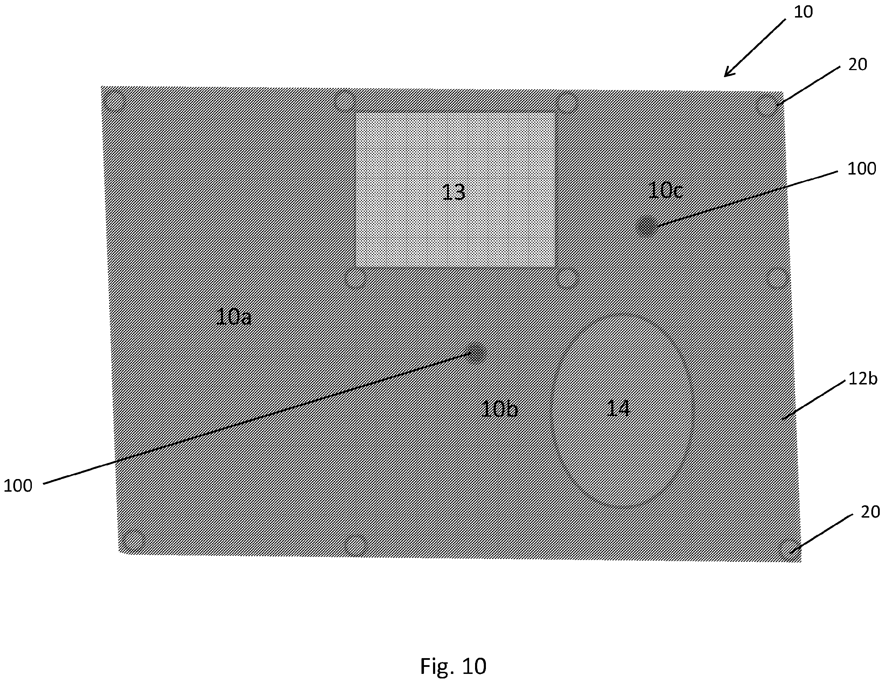

With reference to Figure 10, there is shown another example embodiment of an area 10 to be mowed. In this example, the area 10 is also of a polygonal shape. Within the area 10, a house 13 is provided at the centre top of the mowable area 10. There is further provided an elliptical swimming pool 14 near the bottom right corner of the mowable area 10, which should be a keep out area to be excluded from the mowable area 10. To mow this area, in one example, the user may divide or partition the global area of operation 10 into different local areas of operation e.g. operation zones 10a, 10b and 10c by ways of deploying a plurality of anchors 20 surrounding the sub-areas 10a, 10b and 10c respectively. The operation zones 10a, 10b and 10c are mowed in each operation routine.

The user may perform a boundary-walking for each of the zones 10a to 10c. To exclude the elliptical swimming pool 14 from the mowing zone 10c, the user may guide the mower 100 to walk about the boundary 12b of the zone 10b as well as the boundary of the swimming pool 14. The map data, inclusive of the boundary associated with the swimming pool 14 i.e. a keep out area, may be stored in the processor 400.

The user may initially place a mower 100 in zone 10a to perform mowing operation as discuss above. Once the operation in zone 10a is completed, the user may switch the mower 100 to operate in zone 10b, followed by zone 10c.

Advantageously, although the user may deploy sufficient quantity of anchors 20 for covering different zones of area 10, the user may utilise minimum four anchors 20 for mowing all the zones 10a to 10c phase by phase.

For instance, the user may firstly use the plurality of anchors 20 to define a particular zone for mowing operation e.g. zone 10A in Figure 10. Once the mowing operation in zone 10a is completed, the user may remove only some of the anchors 20 from zone 10a and deploy in the rest of the areas 10 not yet mowed so as to define another zones e.g. zones 10b, 10c for operation. These processes may be repeated until the whole area 10 is mowed.

In one alternative example, the anchor 20 is not positioned exactly on the boundary 12. For instance, although the four anchors 20 together usually form a polygonal preliminary boundary with each anchor 20 preferably located at the four corners of the preliminary boundary, the mower 100 will nonetheless perform aforementioned boundary walking process to determine the substantial boundary 12 of the mowing area 10. Accordingly, the anchor 20 may not necessarily position exactly at the corners of the polygon e.g. the anchor 20 may be positioned outside or inside the boundary 12. It would be appreciated that the positioning of the anchors 20 merely serves as preliminary boundary and the preliminary boundary will subsequently refined by the user i.e. stretched or reduced during the boundary walking process depending on the position of the obstacles on the terrain 10.

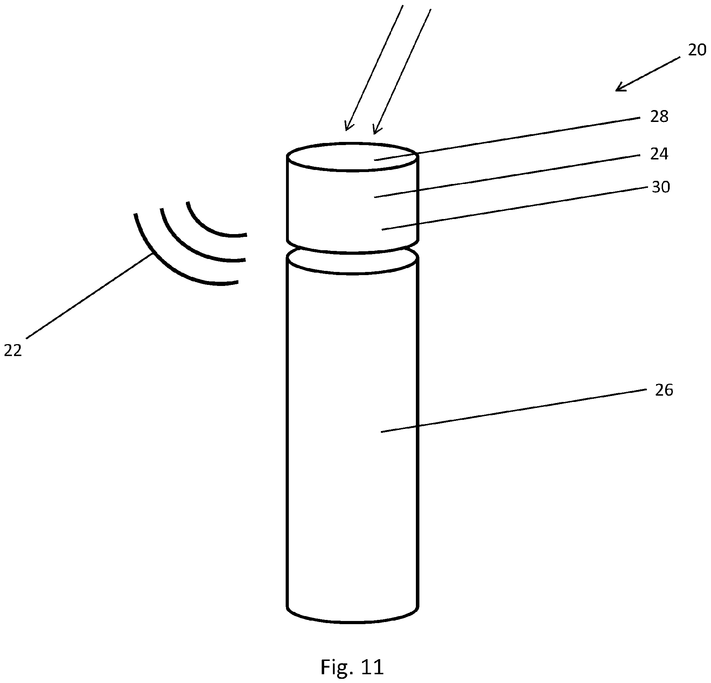

With reference to Figure 11, there is shown an example embodiment of an anchor 20. As shown, the anchor 20 comprises an anchor unit 24 supported underneath by a support structure 26. The anchor unit 24 is a three-dimensional structure having two, upper and lower planar surfaces located at the top and the bottom of the anchor unit 24. It would be appreciated that the anchor unit 24 may have a cylindrical, cubic, cuboidal shape or a shape of triangular prism, hexagonal prism, etc.

In one example, the anchor unit 24 may comprise a solar panel 28, at least one battery and a signaling module 30. The solar panel 28 may be arranged on the upper surface of the anchor unit 20 for absorbing sunlight. On one hand, the solar panel 28 may serve as a power source by converting the solar energy into electrical energy to power the anchor unit 24. On the other hand, the solar panel 28 may convert excessive solar energy into electrical energy that can be stored in the battery such that the anchor unit 24 may still operate under cloudy weather or temporarily blocked from sunlight.

The battery may be of any rechargeable battery, examples include but not limiting to nickel-cadmium, nickel-metal hydride, lithium-ion, lithium-ion polymer batteries, etc. When anchor 20 is operated under an environment that the solar panel is not able to power the anchor unit 24, the anchor unit 24 may be powered solely by the battery or in combination with the solar panel. The combination of solar panel and battery as the power source may be advantageous that it may provide a more environmental-friendly mowing operation.

The signal module 30 of the anchor unit 24 may include a signal receiver and a signal transmitter which in turn allow the anchor 20 to communicate with other anchors 20 as well as the signalling module 300 of the mower 100. In this way, the position of the anchor 20 and the mower 100 may be determined based on the signals transmitted between the anchors 20 and between the anchors 20 and the mower 100.

The support structure 26 may be a rod-shaped or a cylindrical shaped structure whilst it would be appreciated that other structures with elongated shape may also be possible. The support structure 26 provides a surface to allow the anchor unit 24 to be releasably attached onto the support structure 26. In this way, the anchor unit 24 is positioned at a higher position to avoid most of the obstacles and in turn, allows the signal 22 to be emitted from the anchor unit 24 to cover a boarder range under a desirable line of sight. In addition, the releasable arrangement between the anchor unit 24 and the support structure 26 may provide flexibility to the user for mowing operation area 10 with different zones e.g. zones 10a, 10b and 10c as mentioned in the previous scenarios shown in Figure 10.

Preferably, the mower 100 may use a virtual boundary created by the user during the boundary-walking process and mapping of the garden 10. The position accuracy of the mower 100 has a plus/minus tolerance based on the precision of the navigation sensors e.g. the signalling module 300. In the present invention, the signalling module 300 may give accuracy up to 10 to 20 cm and thus the mower 100 may comply with the safety regulation which allows only a maximum mower body length of 0.5 meters extending from the boundary 12.

As described in various embodiments of the present invention below, a user may use a set of autonomous tool 100 including but not limited to multiple anchors 20 and a mower 100 in a garden, backyard 10 or in other similar context decided by a skilled addressee for the specific usage.

Preferably, in order to interact with any component of or the entire navigation system 200, inclusive of but not limited to the deployed anchors 20 and the autonomous tool 100, the user is required to download a mobile application onto a mobile device. The mobile devices could be smartphones, computers, computer tablets etc. Through these mobile devices, the user would then be able to communicate and remotely control the activities of the anchors 20 and the autonomous tool 100. However, the means to control the aforementioned system 200 and tool 100 does not limit to mobile apps. The user may also control through other means such as remote control came along with the system 200 and tool 100.

Preferably, anchors 20 may be operated in different modes serving for different purposes. The main feature of the anchors 20 i.e. the first mode is referred to as "mowing mode" whilst the side feature i.e. the second mode is referred to as "internet of things (IOT) mode".

In such "mowing mode", the anchors 20 would assist the mower 100 in mowing a garden or yard 10 as they would define the boundary 12 for the mower 100 to operate within. On the other hand, in such "IOT mode", the anchors 20 would operate as a channel to facilitate the communication between an object (e.g. lamp, surveillance camera etc.) on which the anchor 20 is embedded and the mobile device with the "app" installed. Such mode provides user with remote controllability over the embedded object at any time provided there is wireless connectivity.

To start using one example embodiment of the autonomous tool 100, a user may firstly access to a website or another third party's "apps" which hosts the download link of the "apps" to control the autonomous tool 100 and anchors 20. Then, the user may download the "apps" to the intended mobile device(s).

When the download is completed, the user may tap open the "apps" and register a personal account. Subsequently, the system may request the user to link the "app" with purchased anchors 20 and the mower 100. This may be done by scanning the "QR code" or other similar unique signature labelled on the anchors 20 and the mower 100 with the scanner function of the "apps".

Optionally, instead of aforesaid way of pairing, the user may be requested to type the unique identification code labelled on those devices in the "apps". After that and with Wi-fi, Bluetooth or other similar connectivity, the anchors 20, the mower 100, and the mobile device with the "app" installed thereon would be linked and communicable with each other. At this point, the user could wirelessly control the paired anchors 20 and the mower 100 with the mobile device.

Examples of a deployment of anchors 20 may be found in places where mowing is required. This may include but not limited to backyard, front yard, gardens in park 10 or other facilities. In this context, mower 100 may operate within the boundaries 12 defined by the anchors 20.

Alternatively, these anchors 20 may also be used indoor such as but not limited to office, home and shopping malls. Users may attach an anchor 20 to a compatible device such as but not limited to light, curtain, surveillance camera etc. and control the activities thereof. Thus, it may operate as a boundary-defining object or a device to facilitate internet of things.

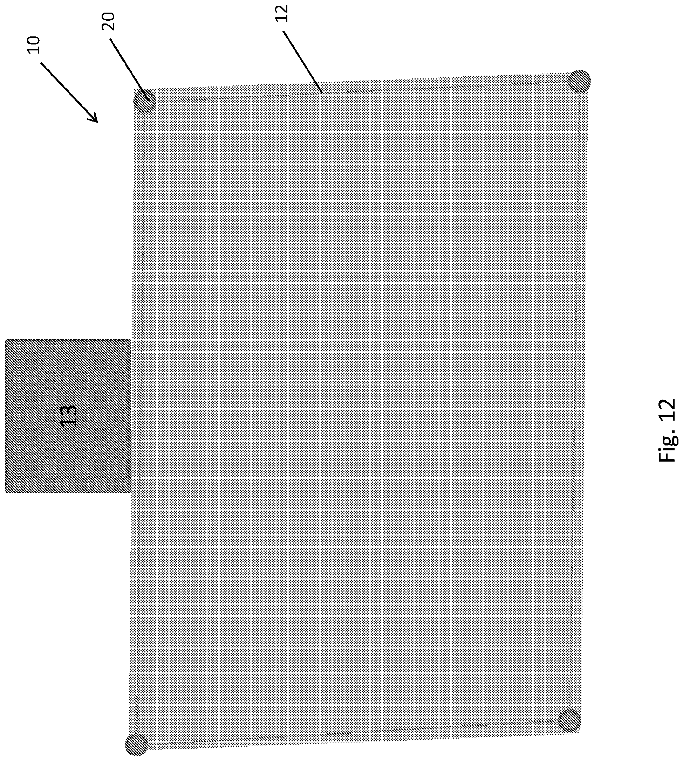

With reference to Figure 12, there is shown a mansion wherein the house 13 itself is located at a side of a quadrilateral shaped yard 10. In addition, there are four anchors 20 in total deployed at each corner of the yard 10. If a user wishes to mow a quadrilateral shaped yard or any shape that has four corners and without any obstacles in the yard 10, the user may deploy an anchor 20 at each corner, in total there may be at least four anchors 20 deployed. The user has to make sure placing the anchor 20 on line-of-sight and that there is no obstacle blocking the line-of-sight between all the anchors 20.

For the first time of use, having had the mobile device paired up with a mower 100 and anchors 20, the user is required to control, through the mobile apps, the mower 100 to perform an aforementioned boundary-walking process.

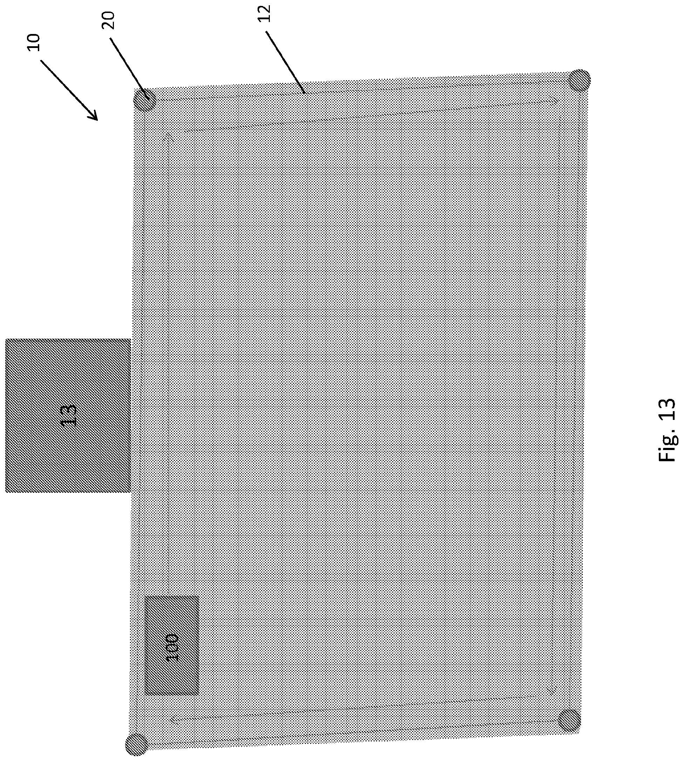

With reference to Figure 13, there is shown a layout of a mansion similar to that displayed in Figure 12. Before the start of boundary walking, the user is required to lay the mower 100 at any point on either one of the boundaries 12. The user is also required to tap open the "apps" installed in the mobile device and select the relevant function on the "apps". Then, the user could begin the boundary walking phase by controlling the mower 100 to walk along all four boundaries 12 by the mobile device or any other remote controller as demonstrated by the arrow sign in the Figure. The mobile device may be communicable with the mower 100 through the user of Wi-fi, Bluetooth, or other similar radio frequency identification methods. The entire process of boundary walking would end when the mower 100 walks back to the point where it began the process of boundary walking.

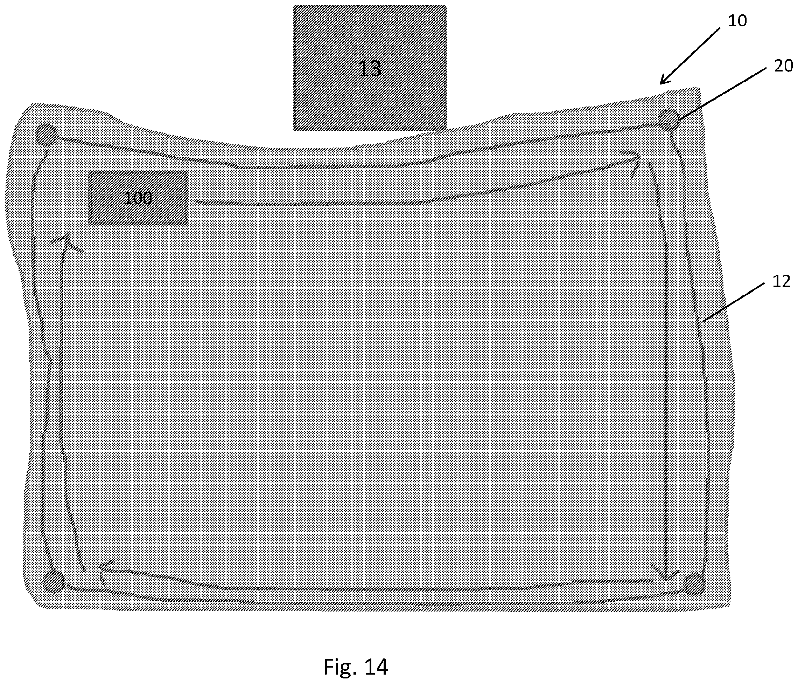

In an alternative example with reference to Figure 14, when either one or more boundaries 12 are not straight but curved or irregular shaped and without any obstacles in the yard 10, the user could still follow the same procedures as described above. The only difference in this case as compared to the aforementioned scenario in Figure 13 is that the user may no longer controls the mower 100 to walk in a straight line between the two anchors 20 but the user has to instruct the mower 100 to walk in a route following the curved or irregular contour of the yard 10.

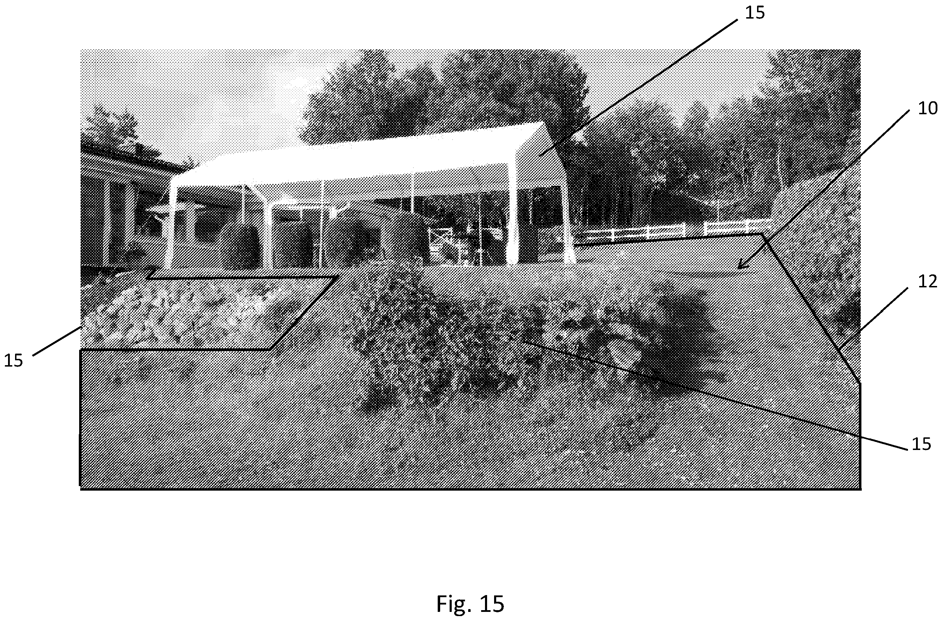

In most cases as shown in Figure 15, there might be numerous obstacles in a garden or yard 10. Those obstacles may be a pond, bushes, trees, pavilion, pavement 15 etc. In this case, in addition to those anchors 20 located at each corner, the user may deploy one or more anchors 20 around the obstacle. The user may then, through the same function in the "apps", set those newly deployed anchors 20 as "fences" 12, such that the mower 100 would not walk pass those "fences" 12 and hit the obstacle. In cases of some unknown failures, the anchors 20 may alert the user through the mobile app upon should the mower 100 mistakenly trespass through the fences. Such alert may be communicated with the use of any radio frequencies identification method such as but not limited to Wi-fi and Bluetooth.

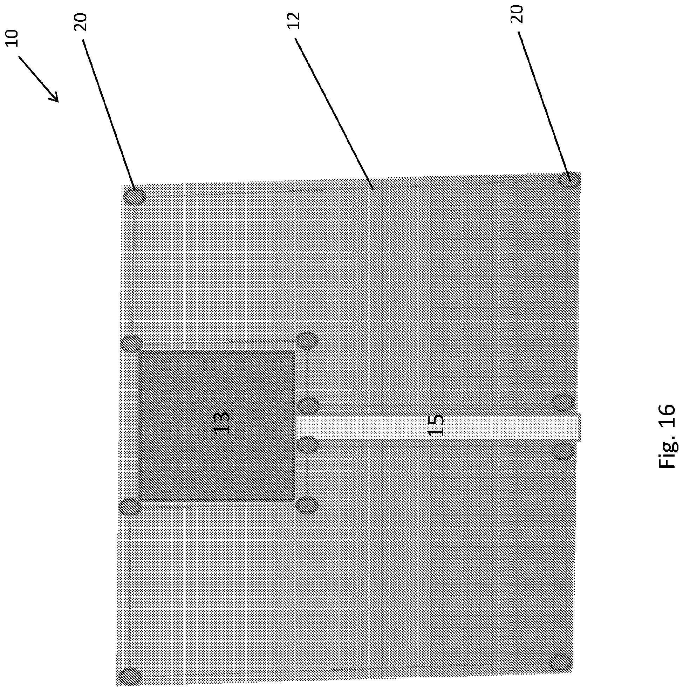

A garden or yard 110 may contain more than four corners. With reference to Figure 16, there is shown a house 13 and a pavement 15 stretched from the house 13 to an entrance of the mansion. In this case, surrounding the house 13 and the pavement 15, there are in total twelves corners in the mansion. In this scenario, the user may opt to purchase more anchors 20 and station them at every corner in the mansion.

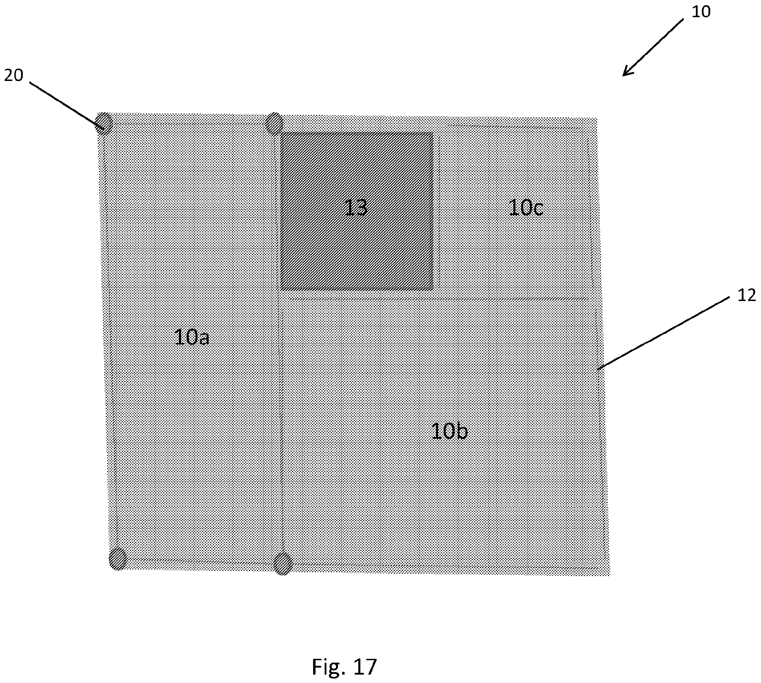

As an alternative to deal with yards 10 with more than four corners, with reference to Figure 17, a user may opt to divide the entire yard 10 into multiple rectangular sections as many as the user may wish. The user may then select to operate on either one of the section by setting up the four anchors 20, one at each corner. In this embodiment and for the first time of use, the user will have to set up four anchors 20 at each corner at zone 10a as illustrated. Then, the user has to perform the boundary walking within zone 10a before the mower 100 can operate itself in zone 10a. This process repeats for other zones 10b, 10c etc.

Upon the end of each boundary walking phase, the mobile app may prompt the user to save the generated map in some memory space. The memory space may be but not limited to any electronic devices, mower 100 or anchors 20 through any radio frequency identification techniques.

Advantageously, having the ability to save up the map generated during "boundary walking" phase in some memory space, it would be convenient to the user as the user does not have to repeat the same phase in the same yard 10 thereafter.

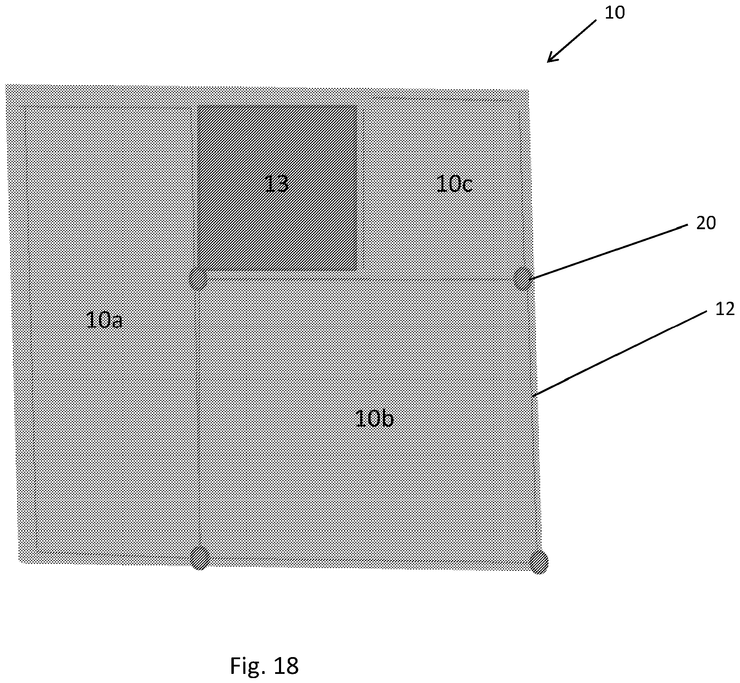

After the boundary walking phase is completed at zone 10a, the user may remove the anchors 20 previously deployed at zone 10a and reuse them in zone 10b as demonstrated in Figure 18. This process may repeat for the rest of the zones 10c etc. until all zones are completed with the boundary walking phase.

Upon the completion of boundary walking phase in one or more zones 10, a user may start the mowing phase. It is necessary to take note that the mowing phase may be carried out as long as any one of the zones e.g. 10a is "boundary-walked" rather than having all the zones 10a, 10b, 10c being "boundary-walked". Again, the user is required to place the anchors 20 at the recorded position during the boundary walking phase although it may not require the same anchor 20 at the exactly same position. In other words, it may be sufficient to have a different anchor 20 at the exactly same position.

To start mowing, the user may have to firstly make sure the mower 100 is connected to the anchors 20. Then, the user may tap open the "apps" and select a function that will wirelessly, through Wi-fi, Bluetooth or other radio frequency identification methods, instruct the mower 100 to start mowing within the zone 10. When the zone 10 is mowed, the mower 100 may return to its dock 500 and await for the next instruction from the user. Should there be more zones to be mowed, the user may firstly remove the anchors 20 and place it to corners at other zones, then the user may tap on the apps and instruct the mower 100 to mow that particular area 10 in accordance with the zone map generated in the "boundary walking" phase.

Optionally, an anchor 20 may also be used as an internet of things on variety of objects such that a user may control the activity of the object on which the anchor 20 is embedded remotely. Those objects may be any everyday objects such as but not limited to lamp, curtain, coffee machine, air conditioner, fan, surveillance camera and so on and so forth. In order to embed the anchor on an object, the user may have to manually disengage the anchor 20 from the object on which it was previously embedded on before the user can fasten it on a new object by some locking mechanism.

The anchor 20 may wirelessly (by means of some radio frequency identification techniques such as but not limited to Wi-fi and Bluetooth) or by wire pair and communicate with the embedded object. Upon successful pairing, the anchor 20 may send a notification and prompt for further action on the "apps". The user may then tap open the notification may wirelessly control the activities of the embedded object. For example, the user may wirelessly turn on or off the lamp or the user may match the closed-circuit television on the "apps" should the anchor 20 is embedded on these objects.

Although not required, the embodiments described with reference to the Figures can be implemented as an application programming interface (API) or as a series of libraries for use by a developer or can be included within another software application, such as a terminal or personal computer operating system or a portable computing device operating system. Generally, as program modules include routines, programs, objects, components and data files assisting in the performance of particular functions, the skilled person will understand that the functionality of the software application may be distributed across a number of routines, objects or components to achieve the same functionality desired herein.

During the mower operation, there may be some cases where the mower 100 would eventually reach a position with weak signal coverage of the signal sources i.e. anchors 20 whilst such weak signal spot has been predetermined and pre-recorded in the map data of the terrain 10 during the aforementioned boundary walking process. Accordingly, although the mower 100 may not localise its position by way of aforementioned trilateration and/or triangulation as described in Figures 4 to 5 which requires receiving of signals from at least three signal source, the current position, the orientation and the traveling direction of the mower 100 may be determined based on the signals 22 emitted by at least two anchors 20.

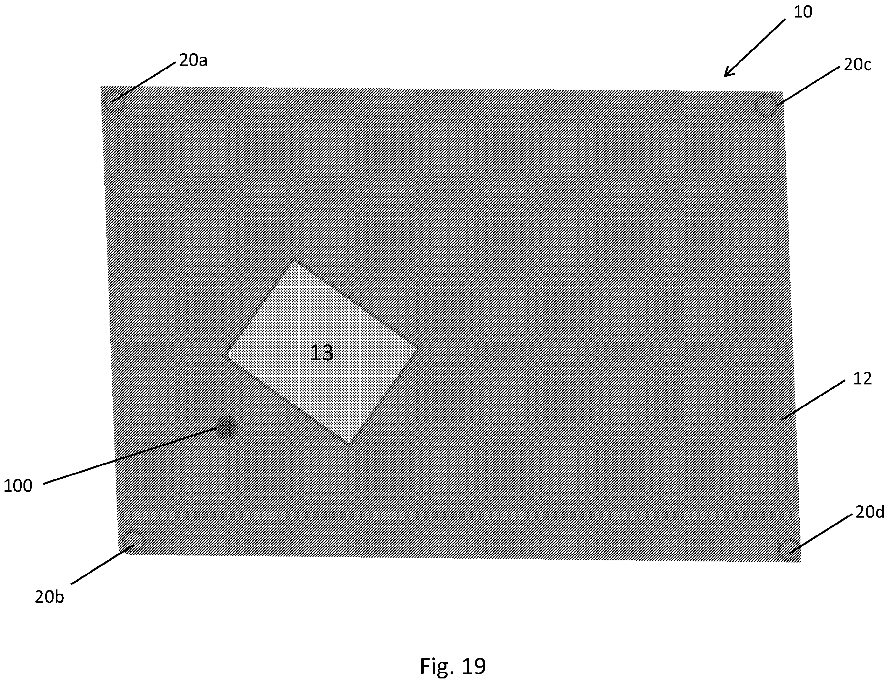

With reference finally to Figure 19, there is shown a terrain 10 to be mowed by the mower 100 and surrounded by four anchors 20a, 20b, 20c and 20d respectively. The mower 100 is at a position where the signal 22 emitted from anchors 20c and 20d are substantially blocked by a house 13. Advantageously, the mower 100 may still continue the mowing operation and travels along the travelling path e.g. defined by aforementioned flood-fill process based on the reference position of anchors 20a and 20b. Once the mower 100 reaches a new position with the coverage of signals 22 where signal 22 emitted from three of the four anchors 20a to 20d may be received by the signal receiver 310, the current position of the mower 100 may be determined by aforementioned trilateration and/or triangulation again.

It will also be appreciated that where the methods and systems of the present invention are either wholly implemented by computing system or partly implemented by computing systems then any appropriate computing system architecture may be utilised. This will include stand alone computers, network computers and dedicated hardware devices. Where the terms "computing system" and "computing device" are used, these terms are intended to cover any appropriate arrangement of computer hardware capable of implementing the function described.

## Claims

1. A method for controlling an autonomous tool (100), comprising the steps of:
receiving, at a current position of the autonomous tool (100), an electromagnetic signal (22) emitted from each of a plurality of signal sources disposed separately on a terrain (10);
processing the received electromagnetic signals (22) thereby determining a physical distance (D1 - D3) between the autonomous tool (100) and each of the plurality of signal sources;
determining the current position of the autonomous tool (100) with respect to a reference position on the terrain (10) based on the determined physical distances (D1 - D3) and map data of the terrain (10) associated with a position of each of the plurality of at least three of signal sources; and
determining the current position of the autonomous tool (100) based on a failure of reception of electromagnetic signal (22) emitted from at least one of the plurality of signal sources during an operation of the autonomous tool (100).

2. The method for controlling an autonomous tool (100) in accordance with Claim 1, wherein:
the physical distance (D1 - D3) between the signaling module (300) and each of the plurality of signal sources is determined further based on a signal propagation speed of the electromagnetic signal (22) on the terrain (10).

3. The method for controlling an autonomous tool (100) in accordance with Claim 1, the method further comprising the steps of:
transmitting, from the autonomous tool (100), a triggering signal (22) to each of the plurality of signal sources, wherein the plurality of signal sources is arranged to transmit the electromagnetic signal (22) upon receiving the triggering signal (22); and
optionally determining the physical distance (D1 - D3) between the autonomous tool (100) and each of the plurality of signal sources based on a signal propagation period of the triggering signal (22) emitted from the autonomous tool (100) reaching each of the plurality of signal sources and the electromagnetic signal (22) emitted from each of the plurality of signal sources reaching the autonomous tool (100) respectively, wherein the physical distance (D1 - D3) is preferably determined based on a time-of-flight calculation method.

4. The method for controlling an autonomous tool (100) in accordance with Claim 1, wherein:
the reference position includes a docking position of the autonomous tool (100), or the position of an anchor (20), wherein the anchor (20) is the signal source arranged to emit the electromagnetic signal (22); or
the travelling path is optionally determined based on an A* pathfinding process; or
the method further comprising the step of
processing supplementary information associated with a navigation of the autonomous tool (100), wherein the supplementary information is provided by at least one sensor, wherein the at least one sensor optionally includes at least one of an IMU (226), an odometry sensor (220) and a GPS sensor (222); or
determining a travelling path starting from the current position of the autonomous tool (100), wherein the travelling path substantially flood fills a target area of operation bound by a predetermined boundary (12), and optionally defining at least one keep out area to be excluded from the target area.

5. The method for controlling an autonomous tool (100) in accordance with Claim 4, further comprising the step of creating and storing map data of the terrain (10) associated with positions of a plurality of anchors (20) disposed on the terrain (10), the target area of operation and the at least one keep out area, wherein:
the map data is optionally created by an application executed on a computing device or upon running a boundary-walking routine on the autonomous tool (100) so as to define the predetermined boundary (12);
the plurality of anchors (20) are optionally positioned at a plurality of corners of a polygonal area defining the target area of operation on the terrain (10); and
at least one of the plurality of anchors (20) is optionally positioned away from the predetermined boundary (12).

6. The method for controlling an autonomous tool (100) in accordance with Claim 4, further comprising the step of
partitioning a global area of operation into a plurality of local areas of operation based on a plurality of boundaries defined by the plurality of anchors (20) disposed separately on the terrain (10), wherein the autonomous tool (100) is optionally controlled to operate on one of plurality of local areas of operation in each operation routine; or
initializing an operation of the autonomous tool (100) prior to the step of determining a travelling path starting from the current position of the autonomous tool (100), wherein the step of initializing an operation of the autonomous tool (100) comprises the step of obtaining an orientation of the autonomous tool (100) by:
determining an initial position of the autonomous tool (100) with respect to the reference position on the terrain (10);
rotating the autonomous tool (100) from a first direction to a second direction; and
travelling the autonomous tool (100) with a predetermined distance along the second direction; and
determining the orientation of the autonomous tool (100) positioned at the second direction based on the determination of the initial position and the current position with respect to the reference position..

7. The method for controlling an autonomous tool (100) in accordance with Claim 1, further comprising the step of:
recording the failure of reception of the electromagnetic signals (22) associated with a predetermined position in the map data of the terrain (10), or continuing the operation of the autonomous tool (100) in response to the failure of reception of the electromagnetic signal (22); and
optionally resuming the determination of the current position of the autonomous tool (100) based on trilateration and/or triangulation upon successfully receiving the electromagnetic signal (22) emitted from at least three of the plurality of signal sources.

8. A method for controlling an autonomous tool (100) in accordance with Claim 1, wherein the autonomous tool (100) includes an outdoor tool or an indoor tool, the outdoor tool optionally includes an autonomous lawn mower (100), a snow thrower or a pressure washer, and the indoor tool optionally includes a vacuum cleaner.

9. A navigation system (200) arranged for use with the method for controlling an autonomous tool (100) according to claims 1 to 8, comprising:
a plurality of anchors (20) disposed separately on a terrain (10) each arranged to emit an electromagnetic signal (22);
a signaling module (300) including a signal receiver (310) arranged to receive the electromagnetic signal (22), wherein the signaling module (300) is connected to the autonomous tool (100) arranged to move on the terrain (10); and
a processor (400) arranged to process the electromagnetic signal (22) received by the signal receiver (310) so as to determine a physical distance (D1 - D3) between the signaling module (300) and each of the plurality of anchors (20);
wherein the processor (400) is further arranged to determine a current position of the signaling module (300) with respect to a reference position on the terrain (10) based on the determined physical distances (D1 - D3) and map data of the terrain (10) associated with a position of each of the plurality of anchors (20).

10. The navigation system (200) in accordance with Claim 9, wherein the processor (400) is further arranged to:
determine the current position of the signaling module (300) based on the determined physical distances (D1 - D3) and the map data of the terrain (10) associated with the position of at least three of the plurality of anchors (20); or
determine the physical distance (D1 - D3) between the signaling module (300) and each of the plurality of anchors (20) based on a signal propagation period of the electromagnetic signal (22) emitted from each of the plurality of anchors (20) reaching the signaling module (300).

11. The navigation system (200) in accordance with Claim 10, wherein the current position is verified by the processor (400) based on the determined physical distances (D1 - D3) and the map data of the terrain (10) associated with the position of an additional anchor (20) other than the at least three of the plurality of anchors (20).

12. The navigation system (200) in accordance with Claim 10, wherein:
the processor (400) is further arranged to determine the physical distance (D1 - D3) between the signaling module (300) and each of the plurality of anchors (20) based on a signal propagation speed of the electromagnetic signal (22) on the terrain (10); and
the physical distance (D1 - D3) is optionally determined based on a time-of-flight calculation method.

13. The navigation system (200) in accordance with Claim 9, wherein:
the reference position includes a docking position of the autonomous tool (100) or the position of one of the plurality of the anchors (20); or
the electromagnetic signal (22) includes a radio frequency signal (22), an ultrawide band radio frequency signal (22), an infrared signal, or a laser signal.

14. The navigation system (200) in accordance with Claim 9, wherein:
the navigation system (200) further comprising at least one sensor arranged to provide supplementary information associated with a navigation of the autonomous tool (100) to the processor (400), wherein the at least one sensor optionally includes at least one of an IMU (226), an odometry sensor (220) and a GPS sensor (222); or
the plurality of anchors (20) are positioned at a plurality of corners of a polygonal area on the terrain (10), and optionally the autonomous tool (100) is arranged to operate within the polygonal area bound by the plurality of anchors (20); or
at least one of the plurality of anchors (20) is positioned away from a predetermined boundary (12) of a target area of operation on the terrain (10).

15. The navigation system (200) in accordance with Claim 9, wherein the autonomous tool (100) includes an outdoor tool or an indoor tool, the outdoor tool optionally includes an autonomous lawn mower, a snow thrower or a pressure washer, and the indoor tool optionally includes a vacuum cleaner.

## Patentansprüche

1. Verfahren zum Steuern eines autonomen Werkzeugs (100), umfassend die Schritte:
Empfangen, an einer aktuellen Position des autonomen Werkzeugs (100), eines elektromagnetischen Signals (22), das von jeder einer Vielzahl von Signalquellen ausgesendet wird, die auf einem Gelände (10) separat angeordnet sind;
Verarbeiten der empfangenen elektromagnetischen Signale (22), um dadurch eine räumliche Entfernung (D1 - D3) zwischen dem autonomen Werkzeug (100) und jeder der Vielzahl von Signalquellen zu bestimmen;
Bestimmen der aktuellen Position des autonomen Werkzeugs (100) in Bezug auf eine Referenzposition auf dem Gelände (10) basierend auf den bestimmten räumlichen Entfernungen (D1 - D3) und Kartendaten des Geländes (10), die einer Position jeder der Vielzahl von mindestens drei Signalquellen zugeordnet sind; und
Bestimmen der aktuellen Position des autonomen Werkzeugs (100) basierend auf einem Scheitern eines Empfangs eines elektromagnetischen Signals (22), das von mindestens einer der Vielzahl von Signalquellen während eines Betriebs des autonomen Werkzeugs (100) ausgesendet wird.

2. Verfahren zum Steuern eines autonomen Werkzeugs (100) nach Anspruch 1, wobei:
die räumliche Entfernung (D1 - D3) zwischen dem Signalisierungsmodul (300) und jeder der Vielzahl von Signalquellen ferner basierend auf einer Signalausbreitungsgeschwindigkeit des elektromagnetischen Signals (22) auf dem Gelände (10) bestimmt wird.

3. Verfahren zum Steuern eines autonomen Werkzeugs (100) nach Anspruch 1, das Verfahren ferner umfassend die Schritte:
Übertragen, von dem autonomen Werkzeug (100), eines Auslösesignals (22) an jede der Vielzahl von Signalquellen, wobei die Vielzahl von Signalquellen eingerichtet ist, um das elektromagnetische Signal (22) bei einem Empfangen des Auslösesignals (22) zu übertragen; und
optional Bestimmen der räumlichen Entfernung (D1 - D3) zwischen dem autonomen Werkzeug (100) und jeder der Vielzahl von Signalquellen basierend auf der Signalausbreitungsperiode des Auslösesignals (22), das von dem autonomen Werkzeug (100) ausgesendet wird, das jede der Vielzahl von Signalquellen erreicht, bzw. des elektromagnetischen Signals (22), das von jeder der Vielzahl von Signalquellen ausgesendet wird, das das autonome Werkzeug (100) erreicht, wobei die räumliche Entfernung (D1 - D3) vorzugsweise basierend auf einem Laufzeitberechnungsverfahren bestimmt wird.

4. Verfahren zum Steuern eines autonomen Werkzeugs (100) nach Anspruch 1, wobei:
die Referenzposition eine Andockposition des autonomen Werkzeugs (100) oder die Position eines Ankers (20) einschließt, wobei der Anker (20) die Signalquelle ist, die eingerichtet ist, um das elektromagnetische Signal (22) auszusenden; oder
der Verfahrweg optional basierend auf einem A*-Wegfindungsprozess bestimmt wird oder das Verfahren ferner umfassend den Schritt:
Verarbeiten von Zusatzinformationen in Verbindung mit einer Navigation des autonomen Werkzeugs (100), wobei die Zusatzinformationen durch mindestens einen Sensor bereitgestellt werden, wobei der mindestens eine Sensor optional mindestens einen von einer IMU (226), einem Odometriesensor (220) und einem GPS-Sensor (222) einschließt; oder
Bestimmen eines Verfahrwegs ausgehend von der aktuellen Position des autonomen Werkzeugs (100), wobei der Verfahrweg einen Zielbereich des Betriebs, der durch eine vorbestimmte Grenze (12) eingefasst ist, im Wesentlichen vollständig ausfüllt, und optional Definieren mindestens eines Sperrbereichs, der aus dem Zielbereich auszuschließen ist.

5. Verfahren zum Steuern eines autonomen Werkzeugs (100) nach Anspruch 4, ferner umfassend den Schritt eines Erzeugens und eines Speicherns von Kartendaten des Geländes (10), die Positionen einer Vielzahl von Ankern (20), die auf dem Gelände (10) angeordnet sind, dem Zielbereich des Betriebs und dem mindestens einen Sperrbereich zugeordnet sind, wobei:
die Kartendaten optional durch eine Anwendung, die auf einer Datenverarbeitungsvorrichtung ausgeführt wird, oder bei einem Ablauf einer Grenzwegbestimmungsroutine auf dem autonomen Werkzeug (100), um die vorbestimmte Grenze (12) zu definieren, erzeugt werden;
die Vielzahl von Ankern (20) optional an einer Vielzahl von Ecken eines polygonalen Bereichs positioniert sind, um den Zielbereich des Betriebs auf dem Gelände (10) zu definieren; und
mindestens einer der Vielzahl von Ankern (20) optional von der vorbestimmten Grenze (12) entfernt positioniert ist.

6. Verfahren zum Steuern eines autonomen Werkzeugs (100) nach Anspruch 4, ferner umfassend den Schritt des
Aufteilens eines Gesamtbereichs des Betriebs in eine Vielzahl von lokalen Betriebsbereichen basierend auf einer Vielzahl von Grenzen, die durch die Vielzahl von Ankern (20) definiert sind, die auf dem Gelände (10) separat angeordnet sind, wobei das autonome Werkzeug (100) optional gesteuert wird, um bei jeder Betriebsroutine in einem der Vielzahl von lokalen Betriebsbereichen betrieben zu werden; oder
Initialisierens eines Betriebs des autonomen Werkzeugs (100) vor dem Schritt des Bestimmens eines Verfahrwegs ausgehend von der aktuellen Position des autonomen Werkzeugs (100), wobei der Schritt des Initialisierens eines Betriebs des autonomen Werkzeugs (100) den Schritt eines Erhaltens einer Ausrichtung des autonomen Werkzeugs (100) umfasst, durch:
Bestimmen einer Ausgangsposition des autonomen Werkzeugs (100) in Bezug auf die Referenzposition auf dem Gelände (10);
Drehen des autonomen Werkzeugs (100) aus einer ersten Richtung in eine zweite Richtung und
Verfahren des autonomen Werkzeugs (100) mit einer vorbestimmten Entfernung entlang der zweiten Richtung und
Bestimmen der Ausrichtung des autonomen Werkzeugs (100), das in der zweiten Richtung positioniert ist, basierend auf der Bestimmung der Ausgangsposition und der aktuellen Position in Bezug auf die Referenzposition.

7. Verfahren zum Steuern eines autonomen Werkzeugs (100) nach Anspruch 1, ferner umfassend den Schritt:
Aufzeichnen des Scheiterns des Empfangs der elektromagnetischen Signale (22), die einer vorbestimmten Position in den Kartendaten des Geländes (10) zugeordnet sind, oder Fortsetzen des Betriebs des autonomen Werkzeugs (100) als Reaktion auf das Scheitern des Empfangs des elektromagnetischen Signals (22); und
optional Wiederaufnehmen der Bestimmung der aktuellen Position des autonomen Werkzeugs (100) basierend auf Trilateration und/oder Triangulation, wenn das von mindestens drei der Vielzahl von Signalquellen ausgesendete elektromagnetische Signal (22) erfolgreich empfangen wird.

8. Verfahren zum Steuern eines autonomen Werkzeugs (100) nach Anspruch 1, wobei das autonome Werkzeug (100) ein Werkzeug für den Außenbereich oder ein Werkzeug für den Innenbereich einschließt, wobei das Werkzeug für den Außenbereich optional einen autonomen Rasenmäher (100), einen Schneeräumer oder einen Hochdruckreiniger einschließt und das Werkzeug für den Innenbereich optional einen Staubsauger einschließt.

9. Navigationssystem (200), das für eine Verwendung mit dem Verfahren zum Steuern eines autonomen Werkzeugs (100) nach den Ansprüchen 1 bis 8 eingerichtet ist, umfassend:
eine Vielzahl von Ankern (20), die auf einem Gelände (10) separat angeordnet sind, wobei jeder eingerichtet ist, um ein elektromagnetisches Signal (22) auszusenden;
ein Signalisierungsmodul (300), das einen Signalempfänger (310) einschließt, der eingerichtet ist, um das elektromagnetische Signal (22) zu empfangen, wobei das Signalisierungsmodul (300) mit dem autonomen Werkzeug (100) verbunden ist, das eingerichtet ist, um sich auf dem Gelände (10) zu bewegen; und
einen Prozessor (400), der eingerichtet ist, um das elektromagnetische Signal (22) zu verarbeiten, das durch den Signalempfänger (310) empfangen wird, um die räumliche Entfernung (D1 - D3) zwischen dem Signalisierungsmodul (300) und jedem der Vielzahl von Ankern (20) zu bestimmen;
wobei der Prozessor (400) ferner eingerichtet ist, um die aktuelle Position des Signalisierungsmoduls (300) in Bezug auf eine Referenzposition auf dem Gelände (10) basierend auf den bestimmten räumlichen Entfernungen (D1 - D3) und Kartendaten des Geländes (10), die der Position jedes der Vielzahl von Ankern (20) zugeordnet sind, zu bestimmen.

10. Navigationssystem (200) nach Anspruch 9, wobei der Prozessor (400) ferner eingerichtet ist zum:
Bestimmen der aktuellen Position des Signalisierungsmoduls (300) basierend auf den bestimmten räumlichen Entfernungen (D1 - D3) und den Kartendaten des Geländes (10), die der Position von mindestens drei der Vielzahl von Ankern (20) zugeordnet sind; oder
Bestimmen der räumlichen Entfernung (D1 - D3) zwischen dem Signalisierungsmodul (300) und jedem der Vielzahl von Ankern (20) basierend auf einer Signalausbreitungsperiode des von jedem der Vielzahl von Ankern (20) ausgesendeten elektromagnetischen Signals (22), das das Signalisierungsmodul (300) erreicht.

11. Navigationssystem (200) nach Anspruch 10, wobei die aktuelle Position durch den Prozessor (400) basierend auf den bestimmten räumlichen Entfernungen (D1 - D3) und den Kartendaten des Geländes (10), die der Position eines zusätzlichen Ankers (20) zugeordnet sind, der nicht zu den mindestens drei der Vielzahl von Ankern (20) gehört, verifiziert wird.

12. Navigationssystem (200) nach Anspruch 10, wobei:
der Prozessor (400) ferner eingerichtet ist, um die räumliche Entfernung (D1 - D3) zwischen dem Signalisierungsmodul (300) und jedem der Vielzahl von Ankern (20) basierend auf der Signalausbreitungsgeschwindigkeit des elektromagnetischen Signals (22) auf dem Gelände (10) zu bestimmen; und
die räumliche Entfernung (D1 - D3) optional basierend auf einem Laufzeitberechnungsverfahren bestimmt wird.

13. Navigationssystem (200) nach Anspruch 9, wobei:
die Referenzposition eine Andockposition des autonomen Werkzeugs (100) oder die Position eines der Vielzahl von Ankern (20) einschließt; oder
das elektromagnetische Signal (22) ein Hochfrequenzsignal (22), ein Ultrabreitband-Funkfrequenzsignal (22), ein Infrarotsignal oder ein Lasersignal einschließt.

14. Navigationssystem (200) nach Anspruch 9, wobei:
das Navigationssystem (200) ferner mindestens einen Sensor umfasst, der eingerichtet ist, um Zusatzinformationen in Verbindung mit der Navigation des autonomen Werkzeugs (100) an den Prozessor (400) bereitzustellen, wobei der mindestens eine Sensor optional mindestens einen von einer IMU (226), einem Odometriesensor (220) und einem GPS-Sensor (222) einschließt; oder
die Vielzahl von Ankern (20) an einer Vielzahl von Ecken eines polygonalen Bereichs auf dem Gelände (10) positioniert sind und optional das autonome Werkzeug (100) eingerichtet ist, um innerhalb des polygonalen Bereichs betrieben zu werden, der durch die Vielzahl von Ankern (20) umgrenzt wird; oder
mindestens einer der Vielzahl von Ankern (20) von einer vorbestimmten Grenze (12) eines Zielbereichs des Betriebs auf dem Gelände (10) entfernt positioniert ist.

15. Navigationssystem (200) nach Anspruch 9, wobei das autonome Werkzeug (100) ein Werkzeug für den Außenbereich oder ein Werkzeug für den Innenbereich einschließt, wobei das Werkzeug für den Außenbereich optional einen autonomen Rasenmäher, einen Schneeräumer oder einen Hochdruckreiniger einschließt und das Werkzeug für den Innenbereich optional einen Staubsauger einschließt.

## Revendications

1. Procédé permettant de commander un outil autonome (100), comprenant les étapes consistant à :
recevoir, à une position actuelle de l'outil autonome (100), un signal électromagnétique (22) émis à partir de chacune d'une pluralité de sources de signal disposées séparément sur un terrain (10) ;
traiter les signaux électromagnétiques reçus (22) en déterminant ainsi une distance physique (D1 - D3) entre l'outil autonome (100) et chacune de la pluralité de sources de signal ;
déterminer la position actuelle de l'outil autonome (100) par rapport à une position de référence sur le terrain (10) sur la base des distances physiques déterminées (D1 - D3) et de données cartographiques du terrain (10) associées à une position de chacune de la pluralité d'au moins trois sources de signal ; et
déterminer la position actuelle de l'outil autonome (100) sur la base d'un échec de réception d'un signal électromagnétique (22) émis depuis au moins l'une de la pluralité de sources de signal pendant un fonctionnement de l'outil autonome (100).

2. Procédé de commande d'un outil autonome (100) selon la revendication 1, dans lequel :
la distance physique (D1 - D3) entre le module de signalisation (300) et chacune de la pluralité de sources de signal est déterminée en outre sur la base d'une vitesse de propagation de signal du signal électromagnétique (22) sur le terrain (10).

3. Procédé de commande d'un outil autonome (100) selon la revendication 1, le procédé comprenant en outre les étapes consistant à :
transmettre, à partir de l'outil autonome (100), un signal de déclenchement (22) à chacune de la pluralité de sources de signal, dans lequel la pluralité de sources de signal est agencée pour transmettre le signal électromagnétique (22) lors de la réception du signal de déclenchement (22) ; et
déterminer éventuellement la distance physique (D1 - D3) entre l'outil autonome (100) et chacune de la pluralité de sources de signal sur la base d'une période de propagation de signal du signal de déclenchement (22) émis par l'outil autonome (100) atteignant chacune de la pluralité de sources de signal et du signal électromagnétique (22) émis par chacune de la pluralité de sources de signal atteignant l'outil autonome (100) respectivement, dans lequel la distance physique (D1 - D3) est de préférence déterminée sur la base d'un procédé de calcul de temps de vol.

4. Procédé de commande d'un outil autonome (100) selon la revendication 1, dans lequel :
la position de référence comporte une position d'accueil de l'outil autonome (100), ou la position d'une ancre (20), dans lequel l'ancre (20) est la source de signal agencée pour émettre le signal électromagnétique (22) ; ou
le chemin de déplacement est éventuellement déterminé sur la base d'un processus de recherche de chemin A* ; ou le procédé comprenant en outre l'étape consistant à :
traiter des informations supplémentaires associées à une navigation de l'outil autonome (100), dans lequel les informations supplémentaires sont fournies par au moins un capteur, dans lequel l'au moins un capteur comporte éventuellement au moins l'un parmi une IMU (226), un capteur d'odométrie (220) et un capteur GPS (222) ; ou
déterminer un chemin de déplacement à partir de la position actuelle de l'outil autonome (100), dans lequel le chemin de déplacement sensiblement remplit par diffusion une zone de fonctionnement cible délimitée par une limite prédéterminée (12), et définir éventuellement au moins une zone à accès interdit à exclure de la zone cible.

5. Procédé de commande d'un outil autonome (100) selon la revendication 4, comprenant en outre l'étape de création et de stockage de données cartographiques du terrain (10) associées aux positions d'une pluralité d'ancres (20) disposées sur le terrain (10), sur la zone de fonctionnement cible et sur l'au moins une zone d'exclusion, dans lequel :
les données cartographiques sont éventuellement créées par une application exécutée sur un dispositif informatique ou lors de l'exécution d'une routine de parcours de limite sur l'outil autonome (100) afin de définir la limite prédéterminée (12) ;
la pluralité d'ancres (20) sont éventuellement positionnées au niveau d'une pluralité de coins d'une zone polygonale définissant la zone de fonctionnement cible sur le terrain (10) ; et
au moins l'une de la pluralité d'ancres (20) est éventuellement positionnée à l'écart de la limite prédéterminée (12).

6. Procédé de commande d'un outil autonome (100) selon la revendication 4, comprenant en outre l'étape consistant à :
partitionner une zone de fonctionnement globale en une pluralité de zones de fonctionnement locales sur la base d'une pluralité de limites définies par la pluralité d'ancres (20) disposées séparément sur le terrain (10), dans lequel l'outil autonome (100) est commandé éventuellement pour fonctionner sur l'une d'une pluralité de zones de fonctionnement locales dans chaque routine de fonctionnement ; ou
initialiser un fonctionnement de l'outil autonome (100) avant l'étape de détermination d'un chemin de déplacement à partir de la position actuelle de l'outil autonome (100), dans lequel l'étape d'initialisation d'un fonctionnement de l'outil autonome (100) comprend l'étape d'obtention d'une orientation de l'outil autonome (100) en :
déterminant une position initiale de l'outil autonome (100) par rapport à la position de référence sur le terrain (10) ;
faisant tourner l'outil autonome (100) à partir d'une première direction dans une seconde direction ; et
déplaçant l'outil autonome (100) sur une distance prédéterminée le long de la seconde direction ; et
déterminant l'orientation de l'outil autonome (100) positionné au niveau de la seconde direction sur la base de la détermination de la position initiale et de la position actuelle par rapport à la position de référence.

7. Procédé de commande d'un outil autonome (100) selon la revendication 1, comprenant en outre l'étape consistant à :
enregistrer l'échec de réception des signaux électromagnétiques (22) associés à une position prédéterminée dans les données cartographiques du terrain (10), ou poursuivre le fonctionnement de l'outil autonome (100) en réponse à l'échec de réception du signal électromagnétique (22) ; et
éventuellement reprendre la détermination de la position actuelle de l'outil autonome (100) sur la base d'une trilatération et/ou d'une triangulation lors de la réception réussie du signal électromagnétique (22) émis par au moins trois de la pluralité de sources de signal.

8. Procédé de commande d'un outil autonome (100) selon la revendication 1, dans lequel l'outil autonome (100) comporte un outil d'extérieur ou un outil d'intérieur, l'outil d'extérieur comporte éventuellement une tondeuse à gazon autonome (100), une souffleuse à neige ou un nettoyeur haute pression, et l'outil d'intérieur comporte éventuellement un aspirateur.

9. Système de navigation (200) agencé pour être utilisé avec le procédé de commande d'un outil autonome (100) selon les revendications 1 à 8, comprenant :
une pluralité d'ancres (20) disposées séparément sur un terrain (10) agencées chacune pour émettre un signal électromagnétique (22) ;
un module de signalisation (300) comportant un récepteur de signal (310) agencé pour recevoir le signal électromagnétique (22), dans lequel le module de signalisation (300) est connecté à l'outil autonome (100) agencé pour se déplacer sur le terrain (10) ; et
un processeur (400) agencé pour traiter le signal électromagnétique (22) reçu par le récepteur de signal (310) afin de déterminer une distance physique (D1 - D3) entre le module de signalisation (300) et chacune de la pluralité d'ancres (20) ;
dans lequel le processeur (400) est en outre agencé pour déterminer une position actuelle du module de signalisation (300) par rapport à une position de référence sur le terrain (10) sur la base des distances physiques déterminées (D1 - D3) et de données cartographiques du terrain (10) associées à une position de chacune de la pluralité d'ancres (20).

10. Système de navigation (200) selon la revendication 9, dans lequel le processeur (400) est en outre agencé pour :
déterminer la position actuelle du module de signalisation (300) sur la base des distances physiques déterminées (D1 - D3) et des données cartographiques du terrain (10) associées à la position d'au moins trois de la pluralité d'ancres (20) ; ou
déterminer la distance physique (D1 - D3) entre le module de signalisation (300) et chacune de la pluralité d'ancres (20) sur la base d'une période de propagation de signal du signal électromagnétique (22) émis par chacune de la pluralité d'ancres (20) atteignant le module de signalisation (300).

11. Système de navigation (200) selon la revendication 10, dans lequel la position actuelle est vérifiée par le processeur (400) sur la base des distances physiques déterminées (D1 - D3) et des données cartographiques du terrain (10) associées à la position d'une ancre supplémentaire (20) autre que les au moins trois de la pluralité d'ancres (20).

12. Système de navigation (200) selon la revendication 10, dans lequel :
le processeur (400) est en outre agencé pour déterminer la distance physique (D1 - D3) entre le module de signalisation (300) et chacune de la pluralité d'ancres (20) sur la base d'une vitesse de propagation de signal du signal électromagnétique (22) sur le terrain (10) ; et
la distance physique (D1 - D3) est déterminée éventuellement sur la base d'un procédé de calcul de temps de vol.

13. Système de navigation (200) selon la revendication 9, dans lequel :
la position de référence comporte une position d'accueil de l'outil autonome (100) ou la position de l'une de la pluralité des ancres (20) ; ou
le signal électromagnétique (22) comporte un signal radiofréquence (22), un signal radiofréquence à bande ultra large (22), un signal infrarouge, ou un signal laser.

14. Système de navigation (200) selon la revendication 9, dans lequel :
le système de navigation (200) comprenant en outre au moins un capteur agencé pour fournir des informations supplémentaires associées à une navigation de l'outil autonome (100) au processeur (400), dans lequel l'au moins un capteur comporte éventuellement au moins l'un parmi une IMU (226), un capteur d'odométrie (220), et un capteur GPS (222) ; ou
la pluralité d'ancres (20) sont positionnées au niveau d'une pluralité de coins d'une zone polygonale sur le terrain (10), et éventuellement l'outil autonome (100) est agencé pour fonctionner à l'intérieur de la zone polygonale délimitée par la pluralité d'ancres (20) ; ou
au moins l'une de la pluralité d'ancres (20) est positionnée à l'écart d'une limite prédéterminée (12) d'une zone de fonctionnement cible sur le terrain (10).

15. Système de navigation (200) selon la revendication 9, dans lequel l'outil autonome (100) comporte un outil d'extérieur ou un outil d'intérieur, l'outil d'extérieur comporte éventuellement une tondeuse à gazon autonome, une souffleuse à neige, ou un nettoyeur haute pression, et l'outil d'intérieur comporte éventuellement un aspirateur.
